# EUROPÄISCHE PATENTSCHRIFT

(11) **EP 3 980 617 B1**
(45) Veröffentlichungstag und Bekanntmachung des Hinweises auf die Patenterteilung: **07.08.2024**
(21) Anmeldenummer: 20730600.2
(22) Anmeldetag: 03.06.2020
(51) Int. Cl.: E05B 81/76, E05B 81/78

(54) **SENSORSYSTEM FÜR EIN BEWEGLICHES TEIL EINES FAHRZEUGES**
SENSOR SYSTEM FOR A MOVABLE PART OF A VEHICLE
SYSTÈME DE DÉTECTION POUR UNE PARTIE MOBILE D'UN VÉHICULE

(30) Priorität: 07.06.2019 DE 102019115549
(43) Veröffentlichungstag der Anmeldung: 13.04.2022
(73) Patentinhaber: Huf Hülsbeck & Fürst GmbH & Co. KG, 42551 Velbert (DE)
(72) Erfinder: CHABROWSKI, Christian, 45472 Mülheim (DE)
(74) Vertreter: Bals & Vogel Patentanwälte PartGmbB
(86) Internationale Anmeldenummer: PCT/EP2020/065291
(87) Internationale Veröffentlichungsnummer: WO 2020/245156

(56) Entgegenhaltungen:
- EP-A1- 3 664 046
- WO-A1-2004/007879
- WO-A1-2014/012763
- WO-A1-2016/188694
- WO-A1-2017/009073
- WO-A1-2018/197771
- DE-A1- 10 212 794
- DE-A1- 102012 107 189
- DE-A1- 102014 107 809
- DE-A1- 102015 100 074
- DE-A1- 102015 119 096

## Beschreibung

Die Erfindung betrifft ein Sensorsystem für ein bewegliches Teil eines Fahrzeuges, bspw. in Form eines Türgriffes für eine Tür oder Klappe des Fahrzeuges, mit einer induktiven Sensorvorrichtung nach dem Oberbegriff des unabhängigen Vorrichtungsanspruches. Weiter betrifft die Erfindung ein Verfahren für eine Detektion einer Aktivierungshandlung an einem Sensorsystem eines Fahrzeuges, bspw. In Form eines Türgriffes des Fahrzeuges, nach dem Oberbegriff des unabhängigen Verfahrensanspruches.

Es ist aus dem Stand der Technik bekannt, dass Sensorsysteme, bspw. integriert in Türgriffen von Fahrzeugen zur Aktivierung eines elektrischen Schlosses des Fahrzeuges und folglich zur Betätigung eines beweglichen Teils des Fahrzeuges genutzt werden. Bei dem elektrischen Schloss handelt es sich z. B. um ein elektrisch ansteuerbares Türschloss. Die Entriegelung des Schlosses kann bspw. durch einen ID-Geber (Identifikationsgeber) ausgelöst werden, welcher hierzu bspw. zur Authentifizierung einen Code an ein Sicherheitssystem des Fahrzeuges überträgt. Auch kann es möglich sein, dass eine Aktivierung, wie ein Wecken des ID-Gebers und/oder ein Entriegeln oder ein Öffnen des Schlosses, erst bei oder nach Annäherung des Bedieners, bzw. einer Hand des Bedieners, und/oder bei Kraftausübung durch den Bediener an einem Türgriffkörper des Türgriffes bei oder nach erfolgter Authentifizierung erfolgt. Die Annäherung oder Kraftausübung wird in manchen Türgriffen durch induktive Sensoren detektiert.

Es hat sich als Nachteil herausgestellt, dass die Detektion durch die induktiven Sensoren fehler- und/oder störanfällig sein kann. Bspw. bei der Annäherung mit einem Handy oder einem metallischen Gegenstand an den Türgriff kann eine bloße Annäherung ohne eine Berührung bereits zu einem fehlerhaften Auslösen des induktiven Sensors führen.

Der Erfindung liegt die Aufgabe zugrunde, die voranstehend beschriebenen Nachteile bei einem Sensorsystem, bspw. in Form eines Türgriffes, für ein bewegliches Teil eines Fahrzeuges, insbesondere für eine Aktivierung eines elektrischen Schlosses des Fahrzeuges zwecks einer Betätigung, vorzugsweise eines Öffnens, des beweglichen Teils des Fahrzeuges, mit einer induktiven Sensorvorrichtung zumindest teilweise zu beheben. Insbesondere ist es Aufgabe der Erfindung, ein verbessertes Sensorsystem bzw. einen verbesserten Türgriff mit einer induktiven Sensorvorrichtung zur Verfügung zu stellen. Bevorzugt ist es Aufgabe der Erfindung, ein Sensorsystem bzw. einen Türgriff mit einer induktiven Sensorvorrichtung bereitzustellen, welches bzw. welcher in einer zuverlässigen, fehlerfreien und/oder komfortablen Weise es ermöglicht, eine Aktivierungshandlung eines Bedieners zu detektieren.

Die voranstehende Aufgabe wird durch ein Sensorsystem gemäß dem unabhängigen Vorrichtungsanspruch sowie durch ein Verfahren gemäß dem unabhängigen Verfahrensanspruch gelöst.

Bevorzugte Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Sensorsystem beschrieben sind, selbstverständlich auch im Zusammenhang mit dem erfindungsgemäßen Verfahren und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein Sensorsystem für ein bewegliches Teil eines Fahrzeuges (vorzugsweise ein modular aufgebautes Sensorsystem, bspw. in Form einer einzeln handhabbaren Moduleinheit, z. B. in Form eines (vorzugsweise im Normalfall feststehenden bzw. unbeweglichen) Türgriffes für eine Tür oder Klappe des Fahrzeuges, insbesondere für eine Aktivierung eines elektrischen Schlosses des Fahrzeuges zum Betätigen (d.h. Entriegeln oder Verriegeln und/oder Öffnen oder Schließen) der Tür oder Klappe des Fahrzeuges, aufweisend ein Betätigungselement (bspw. in Form eines Türgriffkörpers oder eines Abschnitts des beweglichen Teils selbst oder eines Abschnitts einer Fahrzeugaußenhaut, welche das bewegliche Teil zumindest zum Teil umgibt, z. B. in Form einer B-Säule bei einer Fahrzeugtür als bewegliches Teil des Fahrzeuges) mit wenigstens einem Deformationsbereich, in welchem zumindest eine (oder mehrere) Aktivierungshandlung durch einen Bediener erfassbar ist, wenigstens ein induktives Aktivierungsmittel, das im Deformationsbereich angeordnet ist, und wenigstens eine am Betätigungselement, bspw. innerhalb des Türgriffkörpers, oder am beweglichen Teil des Fahrzeuges angeordnete Sensorvorrichtung zur Induktivitätsmessung am Aktivierungsmittel. Die Induktivitätsmessung wird dabei durch die Sensorvorrichtung ausgeführt, wobei die Position und/oder die Geometrie des Aktivierungsmittels die Induktivitätsmessung beeinflussen kann.

Bei dem "Fahrzeug" kann es sich vorzugsweise um einen PKW, LKW, Bagger, Traktor, fahrbare Arbeitsmaschine, Boot oder Flugzeug handeln. Ferner wird unter dem "beweglichen Teil" bzw. "beweglichen Bauteil" im Rahmen der Erfindung vorzugsweise eine Tür, Klappe, Seitenschiebetür, Tankklappe, Heckklappe oder Handschuhfachklappe verstanden.

Grundsätzlich ist es denkbar, dass das Sensorsystem in Form einer einzeln handhabbaren Moduleinheit bzw. einer Elektronikbox bereitgestellt werden kann, wobei der Körper der Elektronikbox das Betätigungselement mit wenigstens einem Deformationsbereich ausbilden kann. Die Elektronikbox kann schließlich am Türgriff, am beweglichen Bauteil, bspw. in Form einer Tür oder Klappe, oder an einem Abschnitt einer Fahrzeugaußenhaut, welche das bewegliche Teil zumindest zum Teil umgibt, angeordnet werden, um dort eine Aktivierungshandlung zu erfassen. Dabei kann der Deformationsbereich zu einer entsprechenden verformbaren Fläche des Türgriffes oder des beweglichen Bauteils oder eines Abschnitts einer Fahrzeugaußenhaut, welche das bewegliche Teil zumindest zum Teil umgibt, ausgerichtet werden. Die Anordnung der Elektronikbox kann in einer lösbaren oder unlösbaren Weise erfolgen. Hierzu kann eine form- und/oder kraftschlüssige Befestigung vorgesehen sein.

Hierzu ist es erfindungsgemäß vorgesehen, dass wenigstens ein Abschirmungselement für die wenigstens eine Sensorvorrichtung vorgesehen ist, um Störungen bei der Induktivitätsmessung zu vermeiden.

Die Aktivierungshandlung ist insbesondere eine Kraftausübung (durch den Bediener) am Betätigungselement, bspw. in Form eines Türgriffkörpers oder eines Abschnitts des beweglichen Teils selbst oder eines Abschnitts der Fahrzeugaußenhaut, welche das bewegliche Teil zumindest zum Teil umgibt, welche vorzugsweise eine Deformation im Deformationsbereich bewirkt. Die Aktivierungshandlung erfolgt dabei bevorzugt an einer Außenseite (Außenfläche) des Betätigungselementes bzw. des Türgriffkörpers, welche entsprechend durch den Bediener im normalen Betrieb des Fahrzeuges erreichbar ist. Die Aktivierungshandlung kann dabei z. B. zum manuellen Öffnen und/oder Schließen des beweglichen Teils dienen, wobei das bewegliche Teil vorzugsweise als eine Tür (insbesondere als Front-/ Seiten-/ und/oder Schiebetür) und/oder eine Klappe (insbesondere eine Heckklappe, eine Tankklappe, eine Ladesteckerklappe) des Fahrzeuges ausgebildet ist. Das Fahrzeug ist vorzugsweise ein Kraftfahrzeug und/oder ein Personenkraftfahrzeug und/oder ein Lastkraftfahrzeug. Die Aktivierungshandlung erfolgt vorteilhafterweise kontaktbehaftet oder mit anderen Worten durch eine Berührung des Betätigungselementes bzw. des Türgriffkörpers im Deformationsbereich.

Im Falle eines Türgriffes als ein, vorzugsweise modulares, Sensorsystem im Sinne der Erfindung kann die Berührung des Betätigungselementes bzw. des Türgriffkörpers im Rahmen einer Zugbewegung und/oder einer Druckbewegung am Türgriff, d. h. insbesondere am Türgriffkörper, z. B. durch ein Umgreifen des Türgriffkörpers durch eine Hand des Bedieners, erfolgen. Hierzu greift der Bediener z. B. in eine Griffmulde, welche zwischen dem Türgriffkörper und dem beweglichen Teil gebildet ist.

Im Falle einer Tür als bewegliches Teil des Fahrzeuges im Sinne der Erfindung kann das Betätigungselement als ein Abschnitt der Tür selbst oder als ein Abschnitt der Fahrzeugaußenhaut, welche die Öffnung für die Tür umgibt, z. B. an der B-Säule ausgeführt sein. Die Berührung des Betätigungselementes kann durch ein Antippen des Betätigungselementes und/oder ein leichtes Drücken am Betätigungselement erfolgen, was ein Öffnen der Tür bewirken kann.

Im Falle einer Tankklappe als bewegliches Teil des Fahrzeuges im Sinne der Erfindung kann das Betätigungselement als ein Abschnitt der Tankklappe selbst oder als ein Abschnitt der Fahrzeugaußenhaut, welche die Öffnung für die Tankklappe umgibt, ausgeführt sein. Die Berührung des Betätigungselementes kann durch ein Antippen des Betätigungselementes und/oder ein leichtes Drücken am Betätigungselement erfolgen, was ein Aufspringen der Tankklappe bewirken kann.

Eine positive Detektion der Aktivierungshandlung durch die Sensorvorrichtung führt zu einer Aktivierung des elektrischen Schlosses (und/oder einer Aktivierung einer Sicherheitsvorrichtung des Fahrzeuges), was (zum Entriegeln und/oder Verriegeln und/oder) zum Öffnen und/oder Schließen des elektrischen Schlosses führen kann. Eine Aktivierung des elektrischen Schlosses kann durch eine Ansteuerung eines (vorzugsweise elektrischen) Antriebes erfolgen.

Es kann ferner vorgesehen sein, dass die Aktivierungshandlung durch den Bediener ausschließlich im Deformationsbereich durch die Sensorvorrichtung detektierbar ist. Hierdurch wird der Vorteil erzielt, dass eine sonstige Handlung, wie eine Kraftausübung, am Betätigungselement (bspw. in Form eines Türgriffkörpers oder eines Abschnitts des beweglichen Teils selbst oder eines Abschnitts einer Fahrzeugaußenhaut, welche das bewegliche Teil zumindest zum Teil umgibt) nicht fälschlicherweise als Aktivierungshandlung interpretiert wird. Es kann auch vorgesehen sein, dass das Betätigungselement bzw. der Türgriffkörper, insbesondere die Wandung des Betätigungselementes bzw. des Türgriffkörpers, außerhalb des Deformationsbereiches größtenteils oder vollständig starr und/oder mit einer geringeren Elastizität als im Deformationsbereich ausgebildet ist.

Das Betätigungselement (bspw. in Form eines Türgriffkörpers oder eines Abschnitts des beweglichen Teils selbst oder eines Abschnitts einer Fahrzeugaußenhaut, welche das bewegliche Teil zumindest zum Teil umgibt) kann vorteilhafterweise aus Kunststoff hergestellt sein und/oder Kunststoff zumindest größtenteils oder teilweise aufweisen. Dabei kann das Betätigungselement bzw. der Türgriffkörper als ein Kunststoffspritzgussteil mit einer Ausnehmung oder einem Hohlraum ausgestaltet sein. Auch ist es denkbar, dass das Betätigungselement bzw. der Türgriffkörper zumindest zweiteilig ausgestaltet ist, wobei die beiden Teile bspw. als Ober-/ und Unterschalen eines, vorzugsweise geschlossenen, Gehäuses ausgestaltet sind und die Sensorvorrichtung zur Induktionsmessung im (gebildeten) Schaleninneren aufnehmen, wodurch eine einfache Montage der Sensorvorrichtung möglich ist. Das Gehäuse kann dabei nur noch Öffnungen zum Durchführen von Anschlussleitungen aufweisen. Folglich weist das Betätigungselement bzw. der Türgriffkörpervorzugsweise einen zumindest teilweise von dem Gehäuse umgrenzenden Innenraum, insbesondere Hohlraum, auf, wobei die Sensorvorrichtung bevorzugt innerhalb des Gehäuses des Betätigungselementes bzw. des Türgriffkörpers, d. h. in diesem Innenraum, angeordnet ist. Die Sensorvorrichtung ist dabei bevorzugt mit sämtlichen Sensoren bzw. Sensorelementen und einer Steuerelektronik vollständig im Innenraum des Betätigungselementes bzw. des Türgriffkörpers angeordnet. Ebenfalls ist dabei denkbar, dass die Sensorvorrichtung im Innenraum mit einem Füllelement, z. B. elastischer Vergussmasse, vergossen ist. Die Sensorvorrichtung umfasst z. B. wenigstens einen induktiven Sensor, wie z. B. einen LDC-Sensor (Inductance-to-Digital Converter bzw. Induktivität-Digital-Umsetzer). Das Gehäuse kann schlussendlich mit dem Deformationsbereich zu einer entsprechenden verformbaren Fläche des Türgriffes oder des beweglichen Bauteils oder eines Abschnitts einer Fahrzeugaußenhaut, welche das bewegliche Teil zumindest zum Teil umgibt, positioniert werden. Über das Gehäuse kann das Sensorsystem als Ganzes am Türgriff, am beweglichen Teil oder dem Abschnitt der Fahrzeugaußenhaut befestigt werden, die die Öffnung für das bewegliche Teil umgibt.

Die Sensorvorrichtung dient dabei insbesondere zur (indirekten oder kontaktlosen) Messung der Verformung des Betätigungselementes, insbesondere der Verformung und/oder Zugbewegung des Türgriffes, im Deformationsbereich aufgrund der Aktivierungshandlung. Die Aktivierungshandlung stellt somit eine Deformationshandlung (durch eine Berührung eines Bedieners) dar. Bspw. weist das Betätigungselement bzw. der Türgriffkörper im Deformationsbereich eine mechanisch verformbare Wandung auf, ggf. mit einer Materialschwächung wie einer Ausnehmung, und/oder mit elastisch verformbaren Abdeckungsteilen, um eine Deformation im Deformationsbereich durch die Aktivierungshandlung zu ermöglichen. Aufgrund der Aktivierungshandlung, welche bspw. eine Belastung des Betätigungselementes bzw. des Türgriffkörpers, wie eine Druck- oder Zugbelastung, darstellt, kann vorzugsweise eine maximale Verformung von ca. 0,01 mm bis 2 mm, bevorzugt 0,1 mm bis 1 mm, besonders bevorzugt maximal etwa 0,1 mm erfolgen. Die entsprechenden Werte können bspw. als Schwellenwerte in einem nicht flüchtigen Datenspeicher der Sensorvorrichtung digital gespeichert sein, wobei die Schwellenwerte durch die Sensorvorrichtung auslesbar sind und für die Detektion der Aktivierungshandlung mit den gemessenen Induktivitätswerten verglichen werden können. Hierzu werden die metrischen Werte für die Verformung bspw. in Induktivitätswerte umgerechnet und als solche als Schwellenwert gespeichert, um einen direkten Vergleich durch die Sensorvorrichtung mit den gemessenen Induktivitätswerten zu ermöglichen. Der entsprechende Umrechnungsfaktor hängt von der Geometrie des Betätigungselementes bzw. des Türgriffkörpers und/oder des Aktivierungsmittels im Deformationsbereich ab und kann bspw. durch Versuche ermittelt werden. Das Aktivierungsmittel ist insbesondere derart im Deformationsbereich angeordnet, dass eine Verformung im Deformationsbereich, bzw. der Wandung im Deformationsbereich eine unmittelbare Auswirkung auf die Struktur und/oder die Geometrie des Aktivierungsmittels und/oder den Abstand des Aktivierungsmittels zur Sensorvorrichtung hat. Somit kann zuverlässig eine Detektion der Aktivierungshandlung erfolgen.

Der Erfindungsgedanke liegt dabei darin, dass Störeffekte durch elektromagnetische Wellen, ausgehend bspw. von einem Mobiltelefon, oder durch induktive Störfelder, ausgehend bspw. von bewegten metallischen Objekten, durch das Abschirmungselement gezielt abgefangen werden. Dabei kann das Abschirmungselement vorzugsweise einen Bereich des Betätigungselementes bzw. des Türgriffkörpers abdecken, einen sog. Störbereich, der zur Störung hin zugewandt ist. Meistens liegt dieser Störbereich an einer Seite des Betätigungselementes bzw. des Türgriffes, die vom Fahrzeug abgewandt und die nach außen hin in die Umgebung des Fahrzeuges ausgerichtet ist. Anders formuliert kann das Abschirmungselement im Sinne der Erfindung einen Erfassungsbereich der Sensorvorrichtung bestimmen, vorzugsweise eingrenzen, der insbesondere auf das Aktivierungsmittel ausgerichtet ist. Vorteilhafterweise kann das Abschirmungselement derart am Betätigungselement bzw. am Türgriffkörper, innen oder außen, angeordnet sein, dass die Funktionen anderer Sensoriken, die bspw. auf einer kapazitiven oder einer NFC-Technologie basieren, nicht gestört werden. Im Rahmen der Erfindung kann das Abschirmungselement in Form einer Metallfolie oder einer Metallbeschichtung, die bspw. mithilfe einer Sputterdeposition aufgetragen ist, am Störbereich des Betätigungselementes bzw. des Türgriffkörpers ausgebildet sein. Vorteilhafterweise kann das Abschirmungselement einfach und kostengünstig ausgebildet sein, einfach und mit wenig Aufwand auf dem Betätigungselement bzw. auf dem Türgriffkörper befestigt oder aufgetragen werden und zuverlässig fehlerhafte und ungewollte Fehlbedienungen der induktiven Sensorvorrichtung vermeiden. Das erfindungsgemäße Abschirmungselement kann insbesondere elektromagnetische Wellen abfangen und vorzugsweise induktive Störfelder.

Außerdem kann es im Rahmen der Erfindung von Vorteil sein, dass das Sensorsystem in Form eines Türgriffes, insbesondere eines feststehenden (bzw. unbeweglichen) Türgriffes (im Normalfall, der durch die normale Betätigung des Türgriffs definiert ist) ausgebildet ist, welches vorzugsweise unbeweglich am Fahrzeug, insbesondere am beweglichen Teil des Fahrzeuges, angebracht ist. Alternativ ist es auch denkbar, dass der Türgriff als beweglicher, und insbesondere schwenkbar gelagerter, Türgriff ausgebildet ist. Als feststehender Türgriff weist der Türgriff vorzugsweise keinerlei bewegliche Einzelteile, wie Taster oder dergleichen, auf, welche z. B. zur Detektion einer Kraftausübung dienen können. Der Ausdruck "beweglich" ist dabei gegenüber "verformbar" abzugrenzen, wobei insbesondere die Verformung, im Gegensatz zur Bewegung der beweglichen Einzelteile, monolithisch und/oder als Längenänderung und/oder am einstückigen Bauteil, insbesondere der Wandung, erfolgt. Bspw. bei Tasten erfolgt dagegen eine Relativ-Bewegung zwischen separaten Einzelteilen. Insbesondere erfolgt daher die Erfassung der Verformung aufgrund der Aktivierungshandlung berührungslos und/oder unbeweglich als Induktivitätsmessung durch die Sensorvorrichtung. Der Ausdruck "feststehender Türgriff" bezieht sich insbesondere auch darauf, dass der Türgriff mit dem Türgriffkörper nicht gegenüber dem beweglichen Teil, insbesondere einer Tür und/oder Heckklappe, auslenkbar oder verschwenkbar ist. Dabei muss eine Kraftausübung zur Aktivierung des elektrischen Schlosses, bzw. die Aktivierungshandlung nur in einem als Deformationsbereich ausgebildeten Teilbereich des Türgriffkörpers ausgeübt werden, und nicht der gesamte Türgriffkörper relativ zum beweglichen Teil bewegt werden. Dies hat den Vorteil, dass eine sehr komfortable und sichere Öffnung des beweglichen Teils und/oder Aktivierung des Schlosses erfolgen kann.

Optional kann es im Rahmen der Erfindung vorgesehen sein, dass die Sensorvorrichtung mindestens einen induktiven Sensor, bspw. einen LDC-Sensor, aufweist und/oder als ein induktiver Sensor, bspw. ein LDC-Sensor, ausgebildet ist. Der induktive Sensor, bspw. der LDC-Sensor, dient dabei zur Erfassung von zumindest einer Veränderung einer Induktivität, d. h. insbesondere zur Induktivitätsmessung. Hierzu sind normalerweise verschiedene Bauteile und/oder Schaltkreise notwendig, welche bei dem induktiven Sensor auf einem Chip, bzw. in einem integrierten Schaltkreis vereint sind. Der induktive Sensor und/oder die Sensorvorrichtung sind/ist bspw. dazu aufgeführt, gleichzeitig die Impedanz und die Resonanzfrequenz eines LC-Schwingkreises zu messen. Hierbei ist die Sensorvorrichtung vorzugsweise unempfindlich gegenüber äußeren Einflüssen wie Feuchtigkeit oder Verunreinigung im Bereich des Betätigungselementes bzw. des Türgriffkörpers. Folglich kann zuverlässig eine Fehldetektion durch Witterungseinflüsse wie Regen, welche zu Störungen bei bspw. kapazitiven Sensoren führen, vermieden werden. Eine Fehldetektion durch äußere mechanische Einflüsse, welche eine Kraftausübung auf das Betätigungselement bzw. auf den Türgriffkörper bewirken, kann bspw. dadurch vermieden werden, dass ausschließlich ein Teilbereich des Betätigungselementes bzw. des Türgriffkörpers den Deformationsbereich aufweist und entsprechende Schwellenwerte genutzt werden, welche für die jeweilige Aktivierungshandlung spezifisch ist. Eine Fehldetektion durch äußere elektromagnetische und/oder induktive Einflüsse kann vorteilhafterweise durch das erfindungsgemäße Abschirmungselement vermieden werden. Der induktive Sensor hat dabei weiterhin den Vorteil, dass er sehr empfindlich für Verformungen ist und damit zur Detektion der Aktivierungshandlung sehr schnell und zuverlässig dienen kann. Die Sensorvorrichtung hat dabei z. B. eine Auflösung unter einem Mikrometer mit bspw. einer Bittiefe zur Quantisierung der gemessenen Induktivitätswerte von mindestens 10 bis 24 oder vorzugsweise 10 bis 16 Bit.

Ferner kann die Erfindung bei einem Sensorsystem vorsehen, dass das Betätigungselement bzw. der Türgriffkörper im Deformationsbereich elastisch verformbar ausgestaltet ist. Gemäß einer vorteilhaften Weiterbildung der Erfindung kann weiterhin vorgesehen sein, dass die Sensorvorrichtung zur Detektion der Aktivierungshandlung derart beabstandet zum Aktivierungsmittel angeordnet ist, dass die Verformung des Betätigungselementes bzw. des Türgriffkörpers durch die Induktivitätsmessung erfasst wird. Das Aktivierungsmittel kann als ein elektrisch leitfähiges Element ausgebildet sein, welches bei der Verformung des Betätigungselementes bzw. des Türgriffkörpers im Deformationsbereich relativ zur Sensorvorrichtung bewegt wird. Die Bewegung des Aktivierungsmittels erzeugt in der Sensorvorrichtung eine Änderung der Induktivität. Jede Bewegung des Aktivierungsmittels kann vorteilhafterweise als eine reproduzierbare und/oder bekannte Änderung der Induktivität in der Sensorvorrichtung dargestellt werden. Die Änderung der Induktivität ist sehr empfindlich gegenüber kleinsten Bewegungen des Aktivierungsmittels. Somit kann durch die Induktivitätsmessung zuverlässig eine Aktivierungshandlung als eine mechanische Verformung des Betätigungselementes bzw. des Türgriffkörpers im Deformationsbereich detektiert werden. Vorteilhafterweise kann die gemessene Induktivitätsänderung bspw. mit einem vorbestimmten Schwellenwert verglichen werden, um erst beim Überschreiten des Schwellenwertes die Aktivierungshandlung positiv zu detektieren.

Weiterhin kann die Erfindung vorsehen, dass das Abschirmungselement als eine elektrisch leitende Folie, vorzugsweise Metallfolie, und/oder eine elektrisch leitende Beschichtung und/oder wenigstens ein elektrisch leitendes Element, insbesondere aus Metall, ausgeführt ist. Somit können elektromagnetische und/oder induktive Störeffekte oder Störfelder am Abschirmungselement abgefangen werden. Das Abschirmungselement kann auf diese Weise vorteilhafterweise dazu sorgen, dass mögliche Störfelder keine unbeabsichtigte, insbesondere kontaktfreie, Betätigung der Sensorvorrichtung nach sich ziehen. Folglich können Fehldetektionen durch die Sensorvorrichtung vermieden werden.

Des Weiteren kann die Erfindung vorsehen, dass das Abschirmungselement vollständig galvanisch getrennt von der Sensorvorrichtung und dem Aktivierungselement ausgestaltet ist. Zudem kann das Abschirmungselement vorzugsweise in einem Abstand zu der Sensorvorrichtung von wenigstens 800 µm angeordnet sein. Das Abschirmungselement braucht somit nicht verschaltet werden. Somit kann das Abschirmungselement einfach und bequem am Betätigungselement bzw. am Türgriffkörper montiert werden. Denkbar ist es aber weiterhin, dass das Abschirmungselement auf eine Masse oder ein anderes Potential geschaltet werden kann, um die Störfelder besser ableiten zu können.

Zudem kann die Erfindung vorsehen, dass das Abschirmungselement innenseitig am Betätigungselement bzw. am Türgriffkörper, insbesondere auf einer dem Fahrzeug abgewandten Seite des Betätigungselementes bzw. des Türgriffes angeordnet ist. Somit kann das Abschirmungselement unauffällig angeordnet werden, ohne die Optik des Betätigungselementes bzw. des Türgriffes zu stören.

Außerdem kann die Erfindung vorsehen, dass das Abschirmungselement außenseitig am Betätigungselement bzw. am Türgriffkörper, insbesondere auf einer dem Fahrzeug abgewandten Seite des Betätigungselementes bzw. des Türgriffes angeordnet ist. Somit kann das Abschirmungselement auch nachträglich vorgesehen werden, ohne das fertige Betätigungselement verändern bzw. den fertigen Türgriff öffnen zu müssen.

Ferner kann die Erfindung vorsehen, dass das Abschirmungselement stoffschlüssig, insbesondere mithilfe eines Klebers, am Betätigungselement bzw. am Türgriffkörper befestigt ist. Somit kann eine kostengünstige Montage des Abschirmungselementes am Betätigungselement ermöglicht werden.

Weiterhin ist es denkbar, dass das Abschirmungselement mithilfe eines additiven Beschichtungsverfahrens, vorzugsweise einer chemischen Gasphasenabscheidung oder einer physikalischen Gasphasenabscheidung, insbesondere mithilfe einer Sputterdeposition, am Betätigungselement bzw. am Türgriffkörper aufgetragen sein kann. Somit kann eine gleichmäßige Abdeckung des Störbereiches am Betätigungselement bzw. am Türgriffkörper erreicht werden, die nur wenige Atomlagen an leitenden Partikeln umfassen kann. Ein solches Abschirmungselement ist vorteilhafterweise gewichtsreduziert.

Des Weiteren ist es denkbar, dass das Abschirmungselement form- und/oder kraftschlüssig, insbesondere mithilfe mindestens eines Rastelementes, am Betätigungselement bzw. am Türgriffkörper befestigt ist. Auf diese Weise kann eine besonders einfache, vorzugsweise lösbare Befestigung des Abschirmungselementes ermöglicht werden.

Es ist ferner denkbar, dass das Aktivierungsmittel als eine elektrisch leitende Folie und/oder leitfähige (druckbare) Tinte und/oder eine elektrisch leitende Beschichtung und/oder wenigstens ein elektrisch leitendes Element, insbesondere aus Metall, bevorzugt elastisch verformbar und/oder vollständig galvanisch getrennt, ausgestaltet ist, und besonders bevorzugt innenseitig am Betätigungselement bzw. am Türgriffkörper und/oder an einer Strukturanpassung der Wandung angeordnet ist. Das Aktivierungsmittel ist dabei besonders bevorzugt (z. B. ausschließlich) am Deformationsbereich angeordnet und insbesondere lösbar oder unlösbar derart befestigt, dass sich eine Deformation der Wandung im Deformationsbereich direkt auf das Aktivierungsmittel auswirkt. Die Strukturanpassung der Wandung ist bspw. eine Ausnehmung der Wandung und bewirkt insbesondere eine Materialschwächung der Wandung im Deformationsbereich. Die Strukturanpassung umfasst dabei z. B. die vollständige fahrzeugseitige Wandung des Betätigungselementes bzw. des Türgriffkörpers, außenseitig und/oder innenseitig am Betätigungselement bzw. am Türgriffkörper. Alternativ umfasst die Strukturanpassung bspw. 1 % bis 80 %, vorzugsweise 10 % bis 70 %, bevorzugt 30 % bis 50 % von der gesamten Wandung des Betätigungselementes bzw. des Türgriffkörpers. Bspw. ist das Aktivierungsmittel im Wesentlichen (d. h. auch vollständig) an oder in der (gesamten) Strukturanpassung, z. B. innerhalb der Ausnehmung, angeordnet, und umfasst z. B. 1 % bis 99 %, bevorzugt 10 % bis 70 %, besonders bevorzugt 30 % bis 50 % der Strukturanpassung. Das Aktivierungsmittel kann vorzugsweise innen- oder außenseitig an der Wandung im Bereich der Strukturanpassung und/oder des Deformationsbereiches und/oder zumindest teilweise innerhalb der Wandung angeordnet sein. Dabei weist das Aktivierungsmittel bevorzugt Metall auf, und ist besonders bevorzugt als ein Metallelement ausgebildet. So ist es z. B. denkbar, dass das Aktivierungsmittel als Metallfolie oder sonstige elektrisch leitende Folie innenseitig am Betätigungselement bzw. am Türgriffkörper an der Strukturanpassung angeordnet ist. Auch kann es möglich sein, dass das Aktivierungsmittel als Chrombeschichtung der Wandung im Deformationsbereich ausgebildet ist. Die Strukturanpassung, insbesondere die Ausnehmung, kann dabei eine Erstreckung im Bereich von 500 mm² bis 2000 mm², vorzugsweise im Wesentlichen 1200 mm² aufweisen. Das Aktivierungsmittel ist bevorzugt teilweise oder vollständig elektrisch isoliert, d. h. insbesondere galvanisch getrennt und/oder nicht elektrisch mit einer Elektronik und/oder der Sensorvorrichtung verbunden. Das Aktivierungsmittel ist somit insbesondere galvanisch getrennt von irgendeiner Elektronik und/oder sonstigen elektrischen Bauelementen oder der Sensorvorrichtung ausgeführt und somit vorzugsweise ein lediglich induktiv genutztes Bauteil. Dies hat den Vorteil, dass die Fehleranfälligkeit stark reduziert werden kann, und somit eine zuverlässigere Detektion möglich ist.

Es ist außerdem denkbar, dass wenigstens ein erster Deformationsbereich mit zumindest einem ersten Aktivierungsmittel, insbesondere auf der dem Fahrzeug zugewandten Seite, am Betätigungselement bzw. am Türgriffkörper, und wenigstens ein zweiter Deformationsbereich mit zumindest einem zweiten Aktivierungsmittel insbesondere auf der dem Fahrzeug abgewandten Seite des Betätigungselementes bzw. des Türgriffkörpers vorgesehen ist. Auch ist es denkbar, dass weitere Deformationsbereiche mit weiteren Aktivierungsmitteln vorgesehen sind. Auch kann bspw. ein erster Deformationsbereich dazu ausgeführt sein, eine Zugbelastung einer ersten Aktivierungshandlung, und ein zweiter Deformationsbereich dazu ausgeführt sein, eine Druckbelastung einer zweiten Aktivierungshandlung auszunehmen. Der erste Deformationsbereich und/oder das erste Aktivierungsmittel können/kann bevorzugt der ersten Aktivierungshandlung und der zweite Deformationsbereich und/oder das zweite Aktivierungsmittel der zweiten Aktivierungshandlung zugeordnet sein. Dabei ist der ersten Aktivierungshandlung bspw. eine erste Funktion, wie die Entriegelung oder Öffnung des elektrischen Schlosses, und der zweiten Aktivierungshandlung eine zweite Funktion, wie die Verriegelung oder Schließung des Schlosses, zugeordnet. Somit wird der Vorteil erzielt, dass eine flexible Bedienung des Sensorsystems erfolgen kann.

Erfindungsgemäß sind eine erste Sensorvorrichtung und eine zweite Sensorvorrichtung am Betätigungselement, bspw. innerhalb des Türgriffkörpers, oder am beweglichen Teil vorgesehen, wobei die erste Sensorvorrichtung zur Induktivitätsmessung am ersten Deformationsbereich und die zweite Sensorvorrichtung zur Induktivitätsmessung am ersten oder am zweiten Deformationsbereich ausgeführt ist. Auch hierbei kann die erste Sensorvorrichtung einer ersten Aktivierungshandlung mit einer ersten Funktion, und die zweite Sensorvorrichtung einer zweiten Aktivierungshandlung mit einer zweiten Funktion zugeordnet werden. Die erste Aktivierungshandlung umfasst dabei z. B. eine Zugbelastung und die zweite Aktvierungshandlung umfasst bspw. eine Druckbelastung am Betätigungselement bzw. am Türgriffkörper. Die erste Aktivierungshandlung erfolgt bevorzugt im ersten Deformationsbereich und die zweite Aktivierungshandlung erfolgt bevorzugt im zweiten Deformationsbereich. Die erste und zweite Sensorvorrichtung können bspw. elektrisch miteinander verbunden sein oder unabhängig voneinander und/oder galvanisch voneinander getrennt ausgebildet sein. Alternativ oder zusätzlich ist es denkbar, dass die zweite Sensorvorrichtung oder eine weitere Sensorvorrichtung dazu ausgeführt ist, beim Auftreten eines Fehlers der ersten Sensorvorrichtung die Funktion der ersten Sensorvorrichtung zu übernehmen und das erste Aktivierungsmittel im ersten Deformationsbereich zu überwachen. Hierdurch kann eine verbesserte Ausfallsicherheit gewährleistet werden.

Im Rahmen der Erfindung ist es möglich, dass die erste Sensorvorrichtung und die zweite Sensorvorrichtung auf unterschiedlichen Seiten einer Platine angeordnet sind. Auf diese Weise können die Sensorvorrichtungen unterschiedliche Detektionsbereiche überwachen, um zwischen unterschiedlichen Aktivierungshandlungen, wie z. B. zur Entriegelung oder Öffnung des elektrischen Schlosses, und zur Verriegelung oder Schließung des Schlosses unterschieden wird. Somit kann nicht nur eine flexible, sondern auch eine zuverlässige Bedienung des Sensorsystems erfolgen.

Es ist weiterhin denkbar, dass am Betätigungselement, bspw. innerhalb des Türgriffkörpers, d. h. in einem Innenraum des Türgriffkörpers, bzw. hinter dem Betätigungselement, wenigstens eine oder wenigstens zwei oder wenigstens drei oder wenigstens vier Sensorvorrichtungen angeordnet sind, welche bspw. entlang der Innenseite des Betätigungselementes bzw. das Türgriffkörpers verteilt angeordnet sind. Die Sensorvorrichtung bzw. die Sensorvorrichtungen können dabei an zumindest einer Platine angeordnet sein, und/oder mit einer Steuerelektronik am Betätigungselement, bspw. im Innenraum des Türgriffkörpers, elektrisch verbunden sein. Die Elektronik des Sensorsystems kann bspw. gemeinsam mit der Sensorvorrichtung auf der Platine angeordnet sein. Die Sensorvorrichtung ist vorzugsweise auf der dem Deformationsbereich zugewandten Seite der Platine angeordnet. Weitere Elektronik kann auf derselben oder der abgewandten Seite angeordnet sein. Die Sensorvorrichtung kann bspw. zumindest einen integrierten Schaltkreis und/oder zumindest einen Mikroprozessor und/oder zumindest eine Spule und/oder zumindest einen nicht flüchtigen Datenspeicher aufweisen. Dabei können die Sensorvorrichtungen z. B. jeweils verschiedenen Deformationsbereichen des Betätigungselementes bzw. des Türgriffkörpers zugeordnet werden. Hierdurch können zuverlässig eine oder mehrere Aktivierungshandlungen an unterschiedlichen Bereichen des Betätigungselementes bzw. des Türgriffkörpers detektiert werden.

Ferner kann die Erfindung vorsehen, dass ein erstes Abschirmungselement für eine erste Sensorvorrichtung und ein zweites Abschirmungselement für eine zweite Sensorvorrichtung vorgesehen sind. Somit können die Funktion der ersten Sensorvorrichtung und die Funktion der zweiten Sensorvorrichtung vor Fehlbedienungen geschützt werden.

Außerdem kann die Erfindung vorsehen, dass das erste Abschirmungselement innenseitig am Betätigungselement bzw. am Türgriffkörper und das zweite Abschirmungselement außenseitig am Betätigungselement bzw. am Türgriffkörper angeordnet sind. Das erste Abschirmungselement kann dabei vorteilhafterweise hinter der ersten Sensorvorrichtung an einer Innenseite des Betätigungselementes bzw. des Türgriffkörpers angeordnet sein, die dem Fahrzeug abgewandt ist. Somit kann das erste Abschirmungselement den Störbereich hinter der ersten Sensorvorrichtung abschirmen, der nach außen bzgl. des Fahrzeuges gerichtet ist. Auf diese Weise kann das erste Abschirmungselement sicherstellen, dass nur eine bewusste, vorzugsweise manuelle, Aktivierungshandlung, bspw. durch Hintergreifen hinter den Türgriffkörper in eine Mulde zwischen dem Türgriff und der Fahrzeugoberfläche, detektiert wird und keine ungewollte kontaktfreie Fehlbetätigung der Sensorvorrichtung von außerhalb des Sensorsystems, hier in Form des Türgriffes, möglich ist. Das zweite Abschirmungselement kann vorteilhafterweise den Betrieb der zweiten Sensorvorrichtung vor Fehlbetätigungen schützen. Dabei kann das zweite Abschirmungselement vor dem zweiten Aktivierungsmittel angeordnet werden, von diesem jedoch galvanisch getrennt sein. Auch bei dem zweiten Abschirmungselement kann es vorteilhaft sein, wenn das zweite Abschirmungselement einen Störbereich nach außen, weg vom Fahrzeug abschirmen kann. Bei einem zweiten Abschirmungselement ist es denkbar, dass das zweite Abschirmungselement an einer Außenseite des Betätigungselementes, bspw. in Form des Türgriffkörpers, angebracht ist. Mithin kann auf eine einfache Art und Weise durch das Material der Wandung des Betätigungselementes bzw. des Türgriffkörpers, die vorzugsweise aus Kunststoff ausgeführt sein kann, eine galvanische Trennung des zweiten Abschirmungselementes vom zweiten Aktivierungsmittel sichergestellt werden, wenn das zweite Abschirmungselement innenseitig am Betätigungselement bzw. am Türgriffkörper angeordnet ist. Somit kann sich das zweite Abschirmungselement ebenfalls im Bereich eines zweiten Deformationsbereiches befinden wie das zweite Aktivierungselement.

Zudem ist es denkbar, dass beide, nämlich das erste Abschirmungselement und das zweite Abschirmungselement innenseitig am Betätigungselement bzw. am Türgriffkörper angeordnet sind. Auf diese Weise können beide Elemente unauffällig von außen positioniert werden.

Des Weiteren kann vorgesehen sein, dass die Wandung des Betätigungselementes bzw. des Türgriffkörpers im Deformationsbereich eine Strukturanpassung, insbesondere eine Ausnehmung und/oder eine Materialschwächung, aufweist, wobei vorzugsweise die Wandung und/oder das Betätigungselement bzw. der Türgriffkörper, vorzugsweise ausschließlich, im Bereich der Strukturanpassung und insbesondere aufgrund der Strukturanpassung eine zur Erfassung mit der Sensorvorrichtung ausreichende elastische Verformbarkeit aufweist, welche insbesondere erhöht ist im Vergleich mit der Verformbarkeit der zum Deformationsbereich angrenzenden Bereiche des Betätigungselementes bzw. des Türgriffkörpers. Der Deformationsbereich ist dabei bspw. mittig am Betätigungselement bzw. am Türgriffkörper vorgesehen, und/oder wird von angrenzenden Bereichen umgeben. Der Deformationsbereich oder die Gesamtfläche sämtlicher Deformationsbereiche umfasst dabei z. B. mindestens 2 % und/oder mindestens 4 % und/oder mindestens 8 % und/oder mindestens 10 % der Gesamtaußenfläche des Betätigungselementes bzw. des Türgriffkörpers. Dabei ist es möglich, dass eine erste Strukturanpassung in einem ersten Deformationsbereich und eine zweite Strukturanpassung in einem zweiten Deformationsbereich vorgesehen sind. Die Strukturanpassung ist dabei vorzugsweise eine Materialschwächung, insbesondere in Form einer Ausnehmung der Wandung des Betätigungselementes bzw. des Türgriffkörpers im Deformationsbereich. Hierdurch kann gewährleistet werden, dass eine leichte Verformung durch die Aktivierungshandlung am Betätigungselement bzw. am Türgriffkörper messtechnisch durch die Sensorvorrichtung erfassbar ist. Die Strukturanpassung, insbesondere die Ausnehmung, kann dabei vorzugsweise derart am Betätigungselement bzw. am Türgriffkörper angeordnet sein, dass eine durch die Sensorvorrichtung messbare Verformung beim Umgreifen des Betätigungselementes in Form des Türgriffkörpers mit einer Hand des Bedieners zur Durchführung der Aktivierungshandlung erfolgt.

Ein weiterer Vorteil im Rahmen der Erfindung ist erzielbar, wenn die Strukturanpassung außenseitig am Betätigungselement bzw. am Türgriffkörper, insbesondere an einer Wandung des Betätigungselementes bzw. des Türgriffkörpers im Deformationsbereich, ausgebildet ist. Dabei kann es möglich sein, dass die Strukturanpassung, d. h. insbesondere die Ausnehmung, von außen deutlich durch den Bediener sichtbar ausgestaltet ist. Dies hat den Vorteil, dass für den Bediener der Betätigungsbereich zur Durchführung der Aktivierungshandlung im Deformationsbereich angezeigt wird. Alternativ oder zusätzlich ist es denkbar, dass die Strukturanpassung oder eine weitere (zweite) Strukturanpassung nur innenseitig am Betätigungselement bzw. am Türgriffkörper ausgebildet ist. Somit wird eine nach außen sichtbare ebene und geschlossene Oberfläche erzielt. Entsprechend kann es auch möglich sein, dass das Aktivierungsmittel innenseitig oder außenseitig am Betätigungselement bzw. am Türgriffkörper angeordnet ist. Dabei kann das Aktivierungsmittel von außen sichtbar ausgestaltet sein oder derart im Innenraum des Betätigungselementes bzw. des Türgriffkörpers angeordnet sein, dass es von außen durch den Bediener unerkennbar ist. Weiter kann es möglich sein, dass die Strukturanpassung und/oder das Aktivierungsmittel sowohl außenseitig (erkennbar) und innenseitig (unerkennbar) am Betätigungselement bzw. am Türgriffkörper, insbesondere an der Wandung im Deformationsbereich, ausgebildet ist. Somit kann die Detektion weiter verbessert werden.

Außerdem kann es im Rahmen der Erfindung vorgesehen sein, dass eine durchschnittliche Wandstärke der Wandung außerhalb des Deformationsbereiches wenigstens 50 % größer ist als im Deformationsbereich, wobei vorzugsweise die durchschnittliche Wandstärke der Wandung im Deformationsbereich (Ausnehmungswandstärke), insbesondere der Strukturanpassung, im Bereich von 1 mm bis 2 mm, bevorzugt 1,3 mm bis 1,7 mm, liegt, und vorzugsweise zumindest im Wesentlichen 1,5 mm beträgt. Auch ist es denkbar, dass die Wandstärke des Betätigungselementes bzw. des Türgriffkörpers im Deformationsbereich z. B. im Bereich von 1,4 mm bis 1,5 mm liegt und bspw. maximal 40 % oder maximal 70 % oder maximal 80 % oder maximal 90 % der Wandstärke des Betätigungselementes bzw. des Türgriffkörpers außerhalb des Deformationsbereiches beträgt. Die Wandstärke des Betätigungselementes bzw. des Türgriffkörpers außerhalb des Deformationsbereiches, d. h. die normale Wandstärke des Betätigungselementes bzw. des Türgriffkörpers, liegt bspw. in einem Bereich von 2 mm bis 3 mm, bevorzugt 2,2 mm bis 4 mm, wobei die Wandstärke besonders bevorzugt im Wesentlichen 2,5 mm oder mindestens 2,4 mm beträgt. Es wird somit gewährleistet, dass ausschließlich die Aktivierungshandlung im Deformationsbereich zur durch die Sensorvorrichtung erfassbaren Verformung führt.

Außerdem kann es im Rahmen der Erfindung von Vorteil sein, dass ein Abstand zwischen der Sensorvorrichtung und dem von der Sensorvorrichtung überwachten Aktivierungsmittel im Bereich von 1 mm bis 5 mm, insbesondere 2 mm bis 3 mm liegt. Dabei kann die Sensorvorrichtung bspw. Verformungen von ca. mind. 1/10 mm messen, wobei bei einer Überschreitung eines festgelegten Schwellenwertes ein Öffnungssignal zur Öffnung des Schlosses durch die Sensorvorrichtung und/oder ein Signal zur Aktivierung einer Funktion des Fahrzeuges erzeugt wird. Die Sensorvorrichtung ist dazu bspw. mit einer zentralen Elektronik des Fahrzeuges und/oder mit einem Sicherheitssystem des Fahrzeuges verbunden. Insbesondere wird dabei der Abstand, bzw. die Veränderung des Abstandes zwischen der Sensorvorrichtung und dem Aktivierungsmittel, durch die Sensorvorrichtung messtechnisch erfasst, um eine zuverlässige Detektion der Aktivierungshandlung zu ermöglichen.

Außerdem kann es im Rahmen der Erfindung von Vorteil sein, dass ein Bereich zwischen der Sensorvorrichtung und dem Aktivierungsmittel, und insbesondere ein Innenraum des Betätigungselementes bzw. des Türgriffkörpers, zumindest teilweise mit einem Füllelement, insbesondere einer Vergussmasse, ausgefüllt ist. Das Füllelement ist dabei bevorzugt im Bereich eines Abstandes zwischen der Sensorvorrichtung und dem von der Sensorvorrichtung überwachten Aktivierungsmittel angeordnet. Das Füllelement dient insbesondere zur Abdichtung von außerhalb des Betätigungselementes bzw. des Türgriffkörpers eindringender Feuchtigkeit und kann bspw. als Füllpack und/oder Schaumstoff und/oder als Vergussmasse ausgeführt sein.

Außerdem kann es im Rahmen der Erfindung von Vorteil sein, dass eine kapazitive Sensorik mit mindestens einem kapazitiven Sensorikelement am Betätigungselement, bspw. innerhalb des Türgriffkörpers (z. B. im Innenraum/Hohlraum) vorgesehen ist. Die kapazitive Sensorik dient dabei insbesondere zum Detektieren einer Handlung, insbesondere einer Annährung am Betätigungselement bzw. am Türgriff, insbesondere am Türgriffkörper, um bei einer positiven Detektion der entsprechenden Handlung eine Funktion des Fahrzeuges, wie z. B. ein Verriegeln und/oder Entriegeln des elektrischen Schlosses und/oder einer Zentralverriegelung des Fahrzeuges durchzuführen. Hierzu kann durch die kapazitive Sensorik bspw. bei positiver Detektion ein entsprechendes Steuersignal an ein Steuergerät des Fahrzeuges und/oder eines Sicherheitssystems des Fahrzeuges ausgegeben werden. Dabei kann es möglich sein, dass die von der kapazitiven Sensorik angesteuerten Funktionen des Fahrzeuges sich von der durch die Sensorvorrichtung angesteuerten Funktion des Fahrzeuges unterscheiden. So wird bspw. ausschließlich durch die Sensorvorrichtung (bei der Detektion der Aktivierungshandlung) ein Öffnen des elektrischen Schlosses veranlasst. Insbesondere kann nicht durch die Detektion der kapazitiven Sensorik alleine ein Öffnen, sondern nur ein Entriegeln des elektrischen Schlosses bewirkt werden. Das Entriegeln des Schlosses bewirkt dabei, dass das bewegliche Teil des Fahrzeuges und/oder das Schloss sich öffnen lässt, während bei einem verriegelten Schloss zwar ggf. eine Betätigung des Sensorsystems möglich ist, das bewegliche Teil und/oder das Schloss sich jedoch nicht öffnet. Vom Entriegeln abzugrenzen ist das Öffnen des elektrischen Schlosses, welches eine Aufhebung einer Sperre des Schlosses nach der Entriegelung bewirkt. Hierzu wird ein mechanischer, bewegbarer Türgriff bspw. mechanisch bewegt, um das Schloss und/oder das bewegliche Teil zu öffnen. Bei dem elektrischen Schloss geschieht die Aufhebung der Sperre (das Öffnen des Schlosses) nach einer elektrischen Ansteuerung (Öffnungssignal), wobei bspw. die Falle des Türschlosses unter elektrischer Ansteuerung und ggf. mit einer Antriebseinheit wie einer Servoeinheit oder Motoreinheit betätigt wird, ohne dass es einer Kraftausübung am Türgriff bedarf. Bei solchen elektrischen Schlössern wird die mechanische Auslenkung oder Verstellung eines Türgriffes zum Öffnen überflüssig, und der Türgriff kann somit im Wesentlichen unbeweglich am beweglichen Teil befestigt werden. Das Öffnungssignal, welches vorzugsweise von der Sensorvorrichtung bei der Detektion der Aktivierungshandlung ausgegeben wird, bewirkt somit insbesondere das Öffnen des elektrischen Schlosses derart, dass der Türgriff nur noch unbeweglich am beweglichen Teil zum Greifen und Ziehen am beweglichen Teil genutzt werden muss.

Zudem kann die Erfindung eine NFC-Sensorik mit mindestens einem NFC-Sensorikelement am Betätigungselement, bspw. innerhalb des Türgriffkörpers, vorsehen. Die NFC-Sensorik erweitert den Anwendungsbereich des erfindungsgemäßen Betätigungselementes bzw. des Türgriffes und ermöglicht eine sichere Übertragung von, insbesondere sicherheitsrelevanten, Daten über relativ kurze Distanzen, vorzugsweise bis zu 10 cm. Mithilfe der NFC-Technik kann dem Bediener ermöglicht werden, sein Mobilgerät, wie z. B. Smartphone oder ein Tablett, als einen ID-geber und/oder zur Kommunikation mit dem Fahrzeug, bspw. mit einem Sicherheitssystem des Fahrzeuges, einzusetzen. Ein NFC-Chip kann weiterhin auf einer Karte als ein Kommunikationsmittel und/oder als ein ID-Geber-Chip gespeichert sein. Eine Karte kann vorteilhafterweise im Portmonee des Bedieners mitgeführt werden, ohne viel Platz einzunehmen. Auf diese Weise kann das Mitführen eines herkömmlichen Autoschlüssels als einen ID-Geber, welcher massiv und unhandlich ist, erspart werden.

Ferner kann die Erfindung eine einschichtige oder mehrschichtige Platine für die mindestens eine Sensorvorrichtung, eine Steuerelektronik, und/oder eine kapazitive Sensorik und/oder eine NFC-Sensorik vorsehen. Weiterhin kann die Erfindung vorsehen, dass die mindestens eine Sensorvorrichtung, eine Steuerelektronik, eine kapazitive Sensorik und/oder eine NFC-Sensorik in einer Schicht oder in unterschiedlichen Schichten einer Platine angeordnet sind. Die Anordnung in einer Schicht kann eine bauhöhenreduzierte Anordnung der Elemente nebeneinander ermöglichen. Die Anordnung in unterschiedlichen Schichten kann zudem dazu dienen, die Elemente schichtweise abzudichten. Zudem können die unterschiedlichen Schichten der Platine dazu genutzt werden eine Abschirmung für die Elemente deckungsgleich über unterschiedliche Schichten der Platine einzubauen.

Weiterhin kann die Erfindung vorsehen, dass mindestens eines der folgenden Elemente: die mindestens eine Sensorvorrichtung, eine Steuerelektronik, eine kapazitive Sensorik und/oder eine NFC-Sensorik auf einer Seite, insbesondere nebeneinander, oder auf unterschiedlichen Seiten einer Platine befestigt ist. Somit kann eine flexible Auswahl an Positionen und Erfassungsbereichen der jeweiligen Elemente gewährleistet werden.

Des Weiteren kann die Erfindung vorsehen, dass eine erste Sensorvorrichtung und eine zweite Sensorvorrichtung auf unterschiedlichen Seiten einer Platine befestigt sind. Auf diese Weise können einfach und bequem zwei unterschiedlich ausgerichtete Erfassungsbereiche bereitgestellt werden, die klar trennbar sind und eine sichere Betätigung unterschiedlicher Sensorvorrichtungen ermöglichen.

Ebenfalls Gegenstand der Erfindung ist ein Verfahren für eine Detektion einer Aktivierungshandlung an einem Sensorsystem, bspw. an einem Türgriff, für ein bewegliches Teil eines Fahrzeuges, insbesondere für eine Aktivierung eines elektrischen Schlosses des Fahrzeuges zum Betätigen, insbesondere Öffnen, des beweglichen Teils. Hierbei ist vorgesehen, dass die Aktivierungshandlung durch einen Bediener an einem Betätigungselement des Sensorsystems bzw. an einem Türgriffkörper des Türgriffes in einem Deformationsbereich durchgeführt wird, in welchem ein induktives Aktivierungsmittel angeordnet ist, und eine Sensorvorrichtung am Betätigungselement, bspw. innerhalb des Türgriffkörpers, oder am beweglichen Teil eine Induktivitätsmessung durchführt, um die Aktivierungshandlung zu detektieren. Dabei ist es insbesondere vorgesehen, dass ein Abschirmungselement für die Sensorvorrichtung benutzt wird, um Störungen bei der Induktivitätsmessung zu vermeiden. Damit bringt das erfindungsgemäße Verfahren die gleichen Vorteile mit sich, wie sie ausführlich mit Bezug auf einen erfindungsgemäßen Sensorsystems und/oder Türgriff beschrieben worden sind. Zudem kann ein erfindungsgemäßes Sensorsystems für das erfindungsgemäße Verfahren zum Einsatz kommen.

Gemäß einer vorteilhaften Weiterbildung der Erfindung kann vorgesehen sein, dass die Sensorvorrichtung, insbesondere ausschließlich, bei der Detektion der Aktivierungshandlung ein Öffnungssignal, insbesondere an das elektrische Schloss des Fahrzeuges, ausgibt, wobei die Detektion insbesondere bei einer Erfassung einer Verformung des Betätigungselementes bzw. des Türgriffkörpers von etwa 0,05 mm bis 0,2 mm, bevorzugt 0,1 mm, erfolgt. Es kann dabei z. B. ein Schwellenwert von 0,5 mm oder 0,1 mm oder 0,2 mm, (ggf. umgerechnet als Induktivitätswert) festgelegt werden, wobei bei der Überschreitung des Schwellenwertes durch den gemessenen Induktivitätswert eine positive Detektion der Aktivierungshandlung und somit ein Auslösen (Aktivieren) einer Funktion des Fahrzeuges erfolgt. Dabei kann es vorgesehen sein, dass das insbesondere elektrische Öffnungssignal ausschließlich durch die Sensorvorrichtung, und damit nicht durch andere Sensorik des Fahrzeuges, und/oder des Sensorsystems und/oder des Türgriffes, ausgegeben wird. Bspw. sollte ein kapazitiver Sensor des Sensorsystems und/oder des Türgriffes nicht zur Ausgabe des Öffnungssignals und damit zur Auslösung einer Öffnung des elektrischen Schlosses dienen, da dies unter Umständen zu einer Fehlauslösung, z. B. durch äußere Einflussfaktoren, führt. Entgegen solcher Einflussfaktoren, wie z. B. Feuchtigkeit aufgrund von Regen oder einer Annäherung von Gegenständen, ist dagegen das erfindungsgemäße Verfahren zur Detektion der Aktivierungshandlung mit der Sensorvorrichtung weitestgehend unempfindlich.

Gemäß einem weiteren Vorteil der Erfindung kann vorgesehen sein, dass eine kapazitive Sensorik vorgesehen ist, wobei vorzugsweise die Sensorik eine Annäherung des Bedieners detektiert, insbesondere vor der Detektion der Aktivierungshandlung durch die Sensorvorrichtung. Dabei kann es vorgesehen sein, dass eine Ver- und/oder Entriegelung des Schlosses durch die kapazitive Sensorik erfolgt. Die kapazitive Sensorik kann dazu bspw. mindestens ein kapazitives Sensorikelement, bspw. am Betätigungselement und/oder im Innenraum des Türgriffkörpers, aufweisen. So ist es z. B. denkbar, dass ein Verriegeln des Schlosses dann erfolgt, wenn die Sensorik ein Entfernen des Benutzers vom Fahrzeug, und/oder vom Betätigungselement und/oder vom Türgriff feststellt. Dagegen kann ein Entriegeln des Schlosses bspw. dann erfolgen, wenn die Sensorik eine Annäherung des Bedieners feststellt. Bei der festgestellten Annäherung kann bspw. die Sensorik initiieren, dass ein Wecksignal an einen ID-Geber ausgesendet wird und auf ein Antwortsignal von dem ID-Geber gewartet wird. Bei einer erfolgreichen Authentifizierung anhand des Antwortsignals erfolgt dann automatisch eine Entriegelung des Schlosses. Nach erfolgreicher Entriegelung des Schlosses kann bspw. die Sensorvorrichtung dazu genutzt werden, eine Aktivierungshandlung zu detektieren, um eine Öffnung des Schlosses zu bewirken. Somit ist es denkbar, dass die Detektion der Aktivierungsvorrichtung und/oder die Aktivierung einer Funktion des Fahrzeuges, z. B. die Öffnung des Schlosses, aufgrund der Detektion der Aktivierungshandlung nur dann erfolgt, wenn zuvor eine positive Authentifizierung und/oder eine Entriegelung des Schlosses stattgefunden hat. Weiter ist denkbar, dass ein Öffnungssignal nur dann ausgegeben wird und/oder eine Öffnung nur dann bewirkt wird, wenn die Aktivierungshandlung durch die Sensorvorrichtung detektiert wird. Die Sensorik und/oder die Sensorikelemente können bspw. zumindest teilweise benachbart zur Sensorvorrichtung, insbesondere auf einer gemeinsamen Platine, angeordnet sein.

Weiterhin kann die Erfindung vorsehen, dass eine NFC-Sensorik vorgesehen ist, wobei vorzugsweise mithilfe der NFC-Sensorik eine Kommunikation mit einem Mobilgerät, insbesondere einem Mobilfunktelefon, des Bedieners durchgeführt wird, insbesondere vor der Detektion der Aktivierungshandlung durch die Sensorvorrichtung. Die NFC-Sensorik kann vorzugsweise für eine Verifizierung einer Berechtigung des Bedieners dienen. Vorteilhafterweise kann der entsprechende ID-Geber durch ein Mobilgerät oder eine Karte im Format einer Visitenkarte ausgeführt sein.

Ebenfalls unter Schutz gestellt ist ein Sicherheitssystem für ein Fahrzeug, insbesondere für eine Aktivierung eines elektrischen Schlosses des Fahrzeuges. Das erfindungsgemäße Sicherheitssystem umfasst insbesondere ein erfindungsgemäßes Sensorsystem bzw. einen erfindungsgemäßen Türgriff und/oder das elektrische Schloss und/oder einen ID-Geber und ist vorzugsweise gemäß einem erfindungsgemäßen Verfahren betreibbar. Auch ein Fahrzeug mit dem Sicherheitssystem und/oder Sensorsystem wird explizit im Rahmen der Erfindung beansprucht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische perspektivische Ansicht auf ein erfindungsgemäßes Sensorsystem in Form eines Türgriffes,
- Figur 2: eine schematische Schnittansicht eines erfindungsgemäßen Sensorsystems in Form eines Türgriffes,
- Figur 3: eine schematische Schnittansicht eines erfindungsgemäßen Sensorsystems in Form eines Türgriffes,
- Figur 4: eine weitere schematische Schnittansicht eines erfindungsgemäßen Sensorsystems in Form eines Türgriffes,
- Figur 5a: eine schematische Ansicht eines erfindungsgemäßen Sicherheitssystems,
- Figur 5b: eine schematische Ansicht eines Fahrzeuges mit dem erfindungsgemäßen Sensorsystem,
- Figur 6: eine schematische Darstellung einer möglichen Platine für ein erfindungsgemäßes Sensorsystem in Form eines Türgriffes und
- Figur 7: eine schematische Darstellung einer weiteren möglichen Platine für ein erfindungsgemäßes Sensorsystem in Form eines Türgriffes.

In den nachfolgenden Figuren werden für die gleichen technischen Merkmale auch von unterschiedlichen Ausführungsbeispielen die identischen Bezugszeichen verwendet. In der Regel werden die Bezugszeichen von den gleichen Ausführungsbeispielen nur einmal beschrieben.

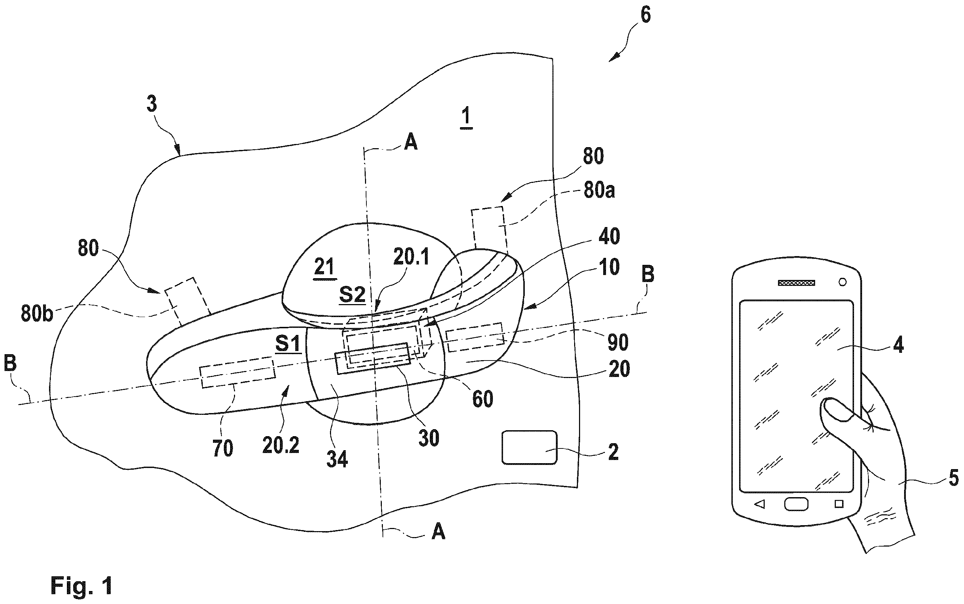

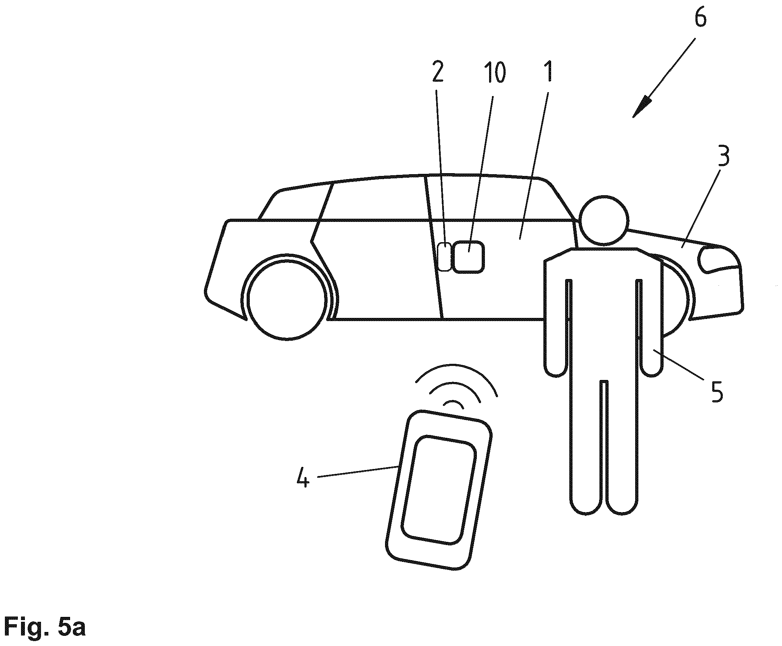

In Figur 1 ist schematisch ein erfindungsgemäßes Sensorsystem 10 in Form eines Türgriffes 10, insbesondere die fahrzeugabgewandte Seite S1 des Türgriffes 10, dargestellt. Das erfindungsgemäße Sensorsystem 10 bzw. der erfindungsgemäße Türgriff 10 ist für eine Aktivierung eines elektrischen Schlosses 2 eines Fahrzeuges 3 ausgebildet. Das erfindungsgemäße Sensorsystem 10 bzw. der erfindungsgemäße Türgriff 10 kann vorteilhafterweise einen Teil eines Sicherheitssystems 6 des Fahrzeuges 3 bilden, welches schematisch in der Figur 5a dargestellt ist. Auf die Funktionsweise des Sicherheitssystems 6 des Fahrzeuges 3 wird im Nachfolgenden im Detail eingegangen.

Das erfindungsgemäße Sensorsystem 10 bzw. der erfindungsgemäße Türgriff 10 weist ein Betätigungselement 20, bspw. in Form eines Türgriffkörpers 20 mit wenigstens einem Deformationsbereich 40 auf. Der Deformationsbereich 40, der in der Figur 1 schematisch dargestellt ist, ist auf einer fahrzeugzugewandten Seite S2 des Türgriffes 10 angeordnet, die in der Ansicht der Figur 1 zu einer Griffmulde 21 ausgerichtet ist. In dem Deformationsbereich 40 des Betätigungselementes 20 bzw. des Türgriffkörpers 20 wird eine Aktivierungshandlung eines Bedieners 5 erfasst, um bspw. ein elektrisches Schloss 2 zu öffnen. Hierzu ist im Deformationsbereich 40 ein induktives Aktivierungsmittel 60 angeordnet. Zudem weist das erfindungsgemäße Sensorsystem 10 bzw. der erfindungsgemäße Türgriff 10 wenigstens eine innerhalb des Betätigungselementes 20 bzw. des Türgriffkörpers 20 angeordnete Sensorvorrichtung 30 zur Induktivitätsmessung am Aktivierungsmittel 60 auf. Erfindungsgemäß ist wenigstens ein Abschirmungselement 34 für die wenigstens eine Sensorvorrichtung 30 vorgesehen, um Störungen bei der Induktivitätsmessung zu vermeiden.

Durch das erfindungsgemäße Abschirmungselement 34 werden vorteilhafterweise Störeffekte durch elektromagnetische Wellen, ausgehend bspw. von einem Mobiltelefon 4 eines berechtigten Bedieners 5 oder eines fremden Passanten, oder durch induktive Störfelder, ausgehend bspw. von bewegten metallischen Objekten, gezielt abgefangen. Das Abschirmungselement 34 kann vorzugsweise einen Bereich, einen sog. Störbereich, des Betätigungselementes 20 bzw. des Türgriffkörpers 20 abdecken, ausgehend von welchem die Störung voraussichtlich kommen kann. Meistens liegt dieser Störbereich an einer Seite S1 des Türgriffes 10, die vom Fahrzeug 3 abgewandt ist. Vorteilhafterweise kann das erfindungsgemäße Abschirmungselement 34 einen Erfassungsbereich der Sensorvorrichtung 30 eingrenzen und insbesondere auf das Aktivierungsmittel 60 ausrichten.

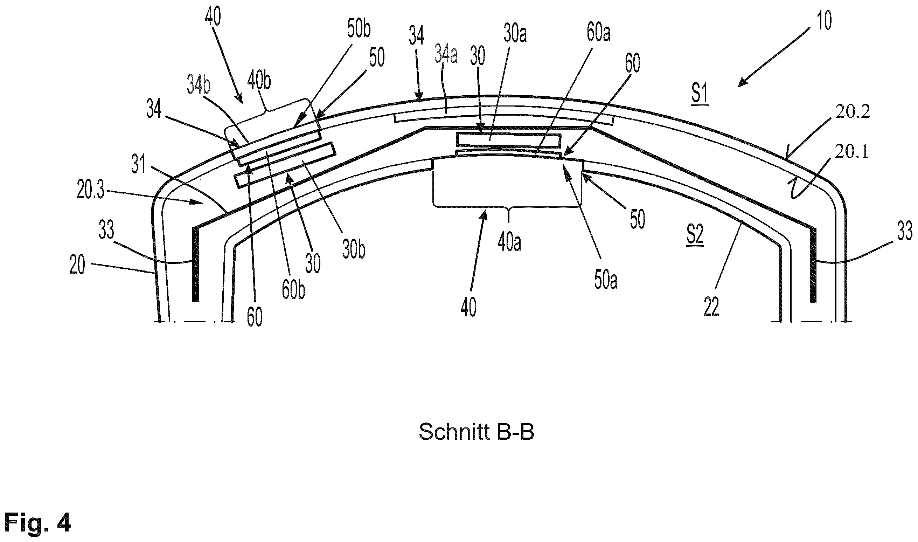

Denkbar ist dabei, dass das Abschirmungselement 34 an einer Innenseite 20.1 des Betätigungselementes 20 bzw. des Türgriffkörpers 20 angeordnet sein kann, vgl. die Figuren 1 bis 3. Gleichwohl ist es aber auch denkbar, dass das Abschirmungselement 34 an einer Außenseite 20.2 des Betätigungselementes 20 bzw. des Türgriffkörpers 20 angeordnet werden kann, vgl. z. B. ein zweites Abschirmungselement 34b in der Figur 4.

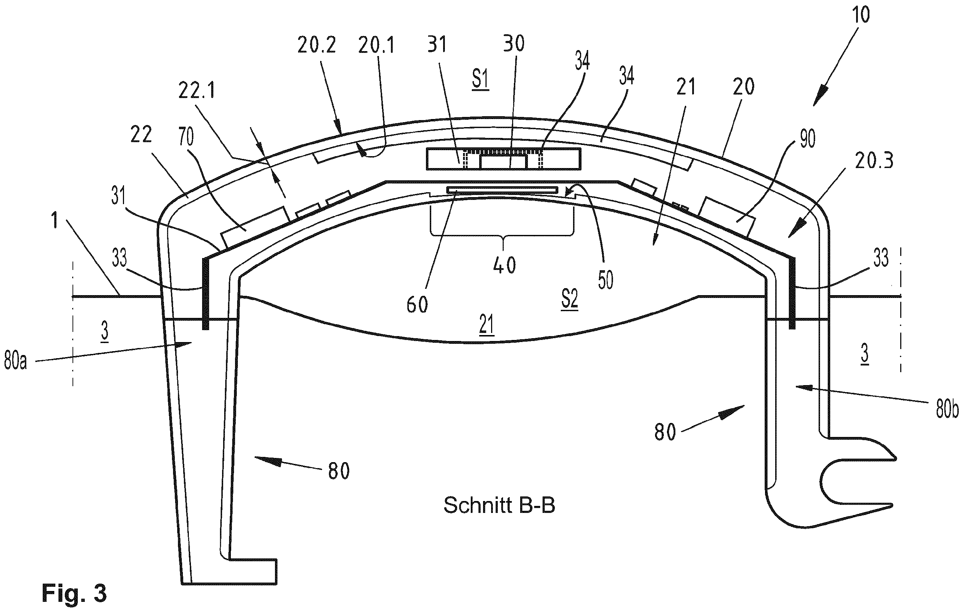

Weiterhin ist es möglich, dass das Abschirmungselement 34 an einer Seite der Sensorvorrichtung 30 angeordnet sein kann, die von dem Aktivierungsmittel 60 abgewandt ist (s. hierzu die gestrichelten Linien in den Figuren 1 und 3).

Wie es die Figuren 1 bis 3 des Weiteren zeigen, kann das Abschirmungselement 34 derart am Betätigungselement 20 bzw. am Türgriffkörper 20, innen oder außen oder eingebettet innerhalb der Wandung 22 des Betätigungselementes 20 bzw. des Türgriffkörpers 20, angeordnet sein, dass die Funktionen anderer Sensoriken, bspw. einer kapazitiven Sensorik 70 und/oder einer NFC-Sensorik 90, nicht beeinträchtigt werden.

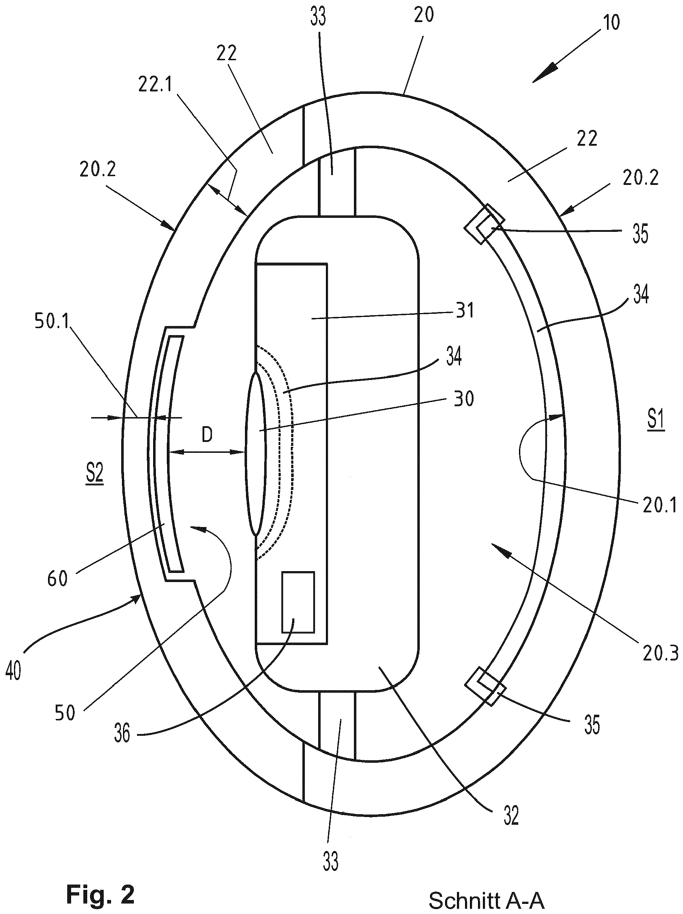

Das erfindungsgemäße Abschirmungselement 34 kann in Form einer eklektisch leitenden Folie, vorzugsweise einer Metallfolie ausgebildet sein, die bspw. am Betätigungselement 20 bzw. am Türgriffkörper 20 aufgeklebt werden kann (denkbar gemäß den Figuren 3 und 4). Ferner ist es denkbar, dass das erfindungsgemäße Abschirmungselement 34 in Form einer elektrisch leitenden Platte, vorzugsweise aus Metall, ausgebildet sein kann, die bspw. mithilfe von mindestens einem Rastelement 35 am Betätigungselement 20 bzw. am Türgriffkörper 20 form- und/oder kraftschlüssig befestigt werden kann (s. bspw. die Figur 2). Weiterhin ist es denkbar, dass das erfindungsgemäße Abschirmungselement 34 in Form einer Metallbeschichtung ausgebildet sein kann, die bspw. mithilfe einer Sputterdeposition am Betätigungselement 20 bzw. am Türgriffkörper 20 aufgetragen werden kann (denkbar gemäß den Figuren 3 und 4). Das erfindungsgemäße Abschirmungselement 34 kann innenseitig oder außenseitig am Betätigungselement 20 bzw. am Türgriffkörper 20 angeordnet sein (vgl. die Figur 4). Gemäß der Figur 4 ist es zudem denkbar, dass ein zweites Abschirmungselement 34b im Deformationsbereich 40, insbesondere an der Strukturanpassung 50, angeordnet werden kann.

Das Betätigungselement 20 bzw. der Türgriffkörper 20 kann vorteilhafterweise aus Kunststoff hergestellt sein und/oder Kunststoff zumindest größtenteils oder teilweise aufweisen. Die Sensorvorrichtung 30 ist dabei bevorzugt mit sämtlichen Sensoren bzw. Sensorelementen und einer Steuerelektronik 36 vollständig in einem Innenraum 20.3 des Betätigungselementes 20 bzw. des Türgriffkörpers 20 angeordnet. Ebenfalls ist dabei denkbar, dass die Sensorvorrichtung 30 im Innenraum 20.3 mit einem Füllelement, z. B. elastischer Vergussmasse, vergossen sein kann.

Die Sensorvorrichtung 30 umfasst vorteilhafterweise wenigstens einen induktiven Sensor, wie z. B. einen LDC-Sensor (Inductance-to-Digital Converter bzw. Induktivität-Digital-Umsetzer). Die Sensorvorrichtung 30 dient dabei insbesondere zur Induktivitätsmessung, d. h. zu einer indirekten oder kontaktlosen Messung der Verformung und/oder Zugbewegung des Betätigungselementes 20 bzw. des Türgriffkörpers 20im Deformationsbereich 40 aufgrund der Aktivierungshandlung.

Der in der Figur 3 dargestellte Türgriff 10 kann durch eine Befestigungsvorrichtung 80, insbesondere im Bereich eines ersten Grifflagerungspunktes 80a und/oder eines zweiten Grifflagerungspunktes 80b, an einem beweglichen Teil 1 des Fahrzeuges 3 lösbar oder unlösbar, insbesondere unbeweglich, befestigt und/oder gelagert werden.

Der in der Figur 1 gezeigte Türgriff 10 kann vorzugsweise als feststehender Türgriff 10 ausgebildet sein. Dabei können mindestens eine oder zwei oder sämtliche Grifflagerungspunkts 80a, 80b der Befestigungsvorrichtung 80 gemäß der Figur 3 als Festlager ausgebildet sein.

Der Türgriffkörper 20 weist eine Wandung 22 mit einer Außenseite 20.2 und einer Innenseite 20.1 auf, die in einer Schnittdarstellung A-A der Figur 2 gezeigt sind. Dabei ist es erkennbar, dass der Deformationsbereich 40 an der fahrzeugzugewandten Innenseite 20.1 der Wandung 22 ausgebildet sein kann. Im Deformationsbereich 40 kann eine Strukturanpassung 50 in Form einer Ausnehmung ausgebildet sein. In diesem Bereich kann bspw. ein induktives Aktivierungsmittel 60 angeordnet sein, welches durch die Sensorvorrichtung 30 überwacht wird. Ferner ist in der Figur 2 erkennbar, dass die Außenseite 20.2 der Wandung 22, welche im Normalfall durch einen Bediener 5 von außen erreichbar ist, als eine ebene und/oder geschlossene Oberfläche des Türgriffes 10 ausgeführt sein kann. Somit kann der Deformationsbereich 40 verdeckt von außen angeordnet sein.

Die Figur 2 zeigt ferner, dass der Deformationsbereich 40 außenseitig an der Außenseite 20.2 des Türgriffkörpers 20 eine geschlossene Oberfläche und innenseitig an der Innenseite 20.1 des Türgriffkörpers 20 Strukturanpassung 50 in Form eine Ausnehmung aufweisen kann. Dabei ist es erkennbar, dass eine Ausnehmungswandstärke 50.1 deutlich geringer ist als eine Wandstärke 22.1 der Wandung 22 außerhalb des Deformationsbereiches 40. Dabei ist es denkbar, dass die durchschnittliche Wandstärke 22.1 der Wandung 22 des Betätigungselementes 20 bzw. des Türgriffkörpers 20 außerhalb des Deformationsbereichs 40 wenigstens 50 % größer ist als im Deformationsbereich 40, wobei vorzugsweise die durchschnittliche Wandstärke 22.1 der Wandung 22 des Türgriffkörpers 20 im Deformationsbereich 40, insbesondere der Strukturanpassung 50, im Bereich von 1 mm bis 2 mm, bevorzugt 1,3 mm bis 1,7 mm, liegt. Hierdurch wird eine Materialschwächung 50 mm hervorgerufen, welche eine durch eine Sensorvorrichtung 30 erfassbare Verformung bei einer Aktivierungshandlung im Deformationsbereich 40 ermöglicht. Die Sensorvorrichtung 30 ist dazu in einem Abstand D vom Deformationsbereich 40 und/oder von einem Aktivierungsmittel 60 im Deformationsbereich 40 angeordnet. Die Verformbarkeit der Wandung 22 im Deformationsbereich 40 unterscheidet sich insbesondere von der Verformbarkeit von Bereichen der Wandung 22 außerhalb des Deformationsbereiches 40, wodurch die Sensorvorrichtung 30 bei einer Aktivierungshandlung nicht in gleicher Weise bewegt wird, wie die Wandung 22 im Deformationsbereich 40. Im unverformten Zustand der Wandung 22 im Deformationsbereich 40 liegt der Abstand D zwischen der Sensorvorrichtung 30 und dem von der Sensorvorrichtung 30 überwachten Aktivierungsmittel 60 im Bereich von 1 mm bis 5 mm, insbesondere 2 mm bis 3 mm.

Die Aktivierungshandlung, welche bspw. eine Belastung des Betätigungselementes 20 bzw. des Türgriffkörpers 20, wie eine Druck- oder Zugbelastung, darstellt, kann vorzugsweise eine maximale Verformung des Betätigungselementes 20 bzw. des Türgriffkörpers 20 von ca. 0,01 mm bis 2 mm, bevorzugt 0,1 mm bis 1 mm, besonders bevorzugt etwa 0,1 mm erfolgen. Die entsprechenden Werte können bspw. als Schwellenwerte in einem nicht flüchtigen Datenspeicher der Sensorvorrichtung 30 digital gespeichert sein. Hierzu werden die metrischen Werte für die Verformung in Induktivitätswerte umgerechnet, um diese mit den gemessenen Induktivitätswerten zu vergleichen. Der entsprechende Umrechnungsfaktor hängt von der Geometrie des Betätigungselementes 20 bzw. des Türgriffkörpers 20 und/oder des Aktivierungsmittels 60 im Deformationsbereich 40 ab und kann bspw. empirisch ermittelt werden.

Weiterhin zeigen die Figuren 2 bis 4, 6 und 7, dass die Sensorvorrichtung 30 auf einer Platine 31 angeordnet und/oder elektrisch mit einer Steuerelektronik 36 verbunden sein kann. Gemäß der Figur 2 kann die Platine 31 der Sensorvorrichtung 30 an einer Halterungsvorrichtung 32 befestigt sein, die mithilfe von Sensorlagerpunkten 33 innenseitig am Betätigungselement 20 bzw. am Türgriffkörper 20 befestigt werden kann. Alternativ ist es gemäß den Figuren 3 und 4 denkbar, dass die Platine 31 ohne eine separate Halterungsvorrichtung 32 mithilfe von Sensorlagerpunkten 33 innenseitig am Türgriffkörper 20 befestigt werden kann. Gemäß der Erfindung hat eine Verformung der Wandung 22 des Türgriffkörpers 20 im Deformationsbereich 40 keinen Einfluss auf die Position der Sensorvorrichtung 30 im Innenraum 20.3. Mit anderen Worten wirkt sich die Verformung nur auf den Abstand D zwischen der Sensorvorrichtung 30 und dem Aktivierungsmittel 60 aus, wodurch der Grad der Verformung anhand des Abstands D und/oder der Induktivitätsänderung messbar ist.

Weiter es in den Figuren 2 bis 4 erkennbar ist, ist die Lagerung der Sensorvorrichtung 30 im Innenraum 20.3 des Betätigungselementes 20 bzw. des Türgriffkörpers 20 unabhängig von der Lagerung des Aktivierungsmittels 60 ausgebildet. Das Aktivierungsmittel 60 ist dabei nicht nur beabstandet zur Sensorvorrichtung 30, sondern auch galvanisch von dieser entkoppelt angeordnet.

Die Figuren 3 und 4 zeigen eine schematische Schnittansicht (gemäß der Schnittebene B-B in der Figur 1) durch den erfindungsgemäßen Türgriff 10. Dabei ist es erkennbar, dass das Aktivierungsmittel 60 als eine Beschichtung der Wandung 22 in der Ausnehmung ausgebildet sein kann. Ferner ist es denkbar, dass das Aktivierungsmittel 60 als eine elektrisch leitende Folie oder Platte ausgebildet sein kann.

Greift nun ein Bediener 5 in die Griffmulde 21 um den Türgriffkörper 20 und übt eine Kraft im Deformationsbereich 40 aus, so erfolgt eine Deformation der Wandung 22 im Deformationsbereich 40. Diese Deformation bewirkt, dass das Aktivierungsmittel 60 verformt und/oder relativ zur Sensorvorrichtung 30 bewegt wird, sodass der Abstand D zwischen dem Aktivierungsmittel 60 und der Sensorvorrichtung 30 (vgl. die Figur 2) verringert wird. Die Veränderung des Abstands D und/oder der Geometrie des Aktivierungsmittels 60 kann durch eine Induktivitätsmessung mithilfe der Sensorvorrichtung 30 erfasst werden, um die Aktivierungshandlung zu detektieren.

Gemäß den Figuren 2 und 3 kann der Türgriff 10 eine Strukturanpassung 50 an einer Innenseite 20.1 einer Wandung 22 eines Türgriffkörpers 20 aufweisen. Alternativ oder zusätzlich ist es gemäß der Figur 4 denkbar, dass eine außenseitige Strukturanpassung 50 an einer Außenseite 20.2 einer Wandung 22 des Betätigungselementes 20 bzw. des Türgriffkörpers 20 des erfindungsgemäßen Türgriffes 10 vorgesehen sein kann. Dies hat den Vorteil, dass der Deformationsbereich 40, an welchem insbesondere eine Aktivierungshandlung durch einen Bediener 5 durchgeführt wird, für den Bediener 5, bspw. haptisch, erkennbar ist. An diesem Deformationsbereich 40 kann bspw. eine Kraftausübung auf die Wandung 22 ausgeübt werden, welche eine Verformung der Wandung 22 im Deformationsbereich 40 und/oder eines Aktivierungsmittels 60 im Deformationsbereich 40 und/oder eine Verringerung eines Abstands D zwischen dem Aktivierungsmittel 60 und der Sensorvorrichtung 30 bewirkt.

Erfindungsgemäß sind ein erster Deformationsbereich 40a und ein zweiter Deformationsbereich 40b vorgesehen (Figur 4). Diese können jeweils eine Strukturanpassung 50 aufweisen. Im Bereich einer ersten Strukturanpassung 50a im ersten Deformationsbereich 40a kann eine erste Aktivierungshandlung und an einer zweiten Strukturanpassung 50b im zweiten Deformationsbereich 40b kann eine zweite Aktivierungshandlung durch den Bediener 5 durchgeführt werden, welche eine Aktivierung unterschiedlicher Funktionen des Fahrzeuges 3 bewirken können. So kann bspw. eine Zugbelastung im ersten Deformationsbereich 40a durch die erste Aktivierungshandlung ein Öffnen und eine Druckbelastung im zweiten Deformationsbereich 40b durch die zweite Aktivierungshandlung ein Schließen des elektrischen Schlosses 2 bewirken. Entsprechend sind auch eine erste Sensorvorrichtung 30a zur Überwachung des ersten Deformationsbereichs 40a und/oder eines ersten Aktivierungsmittels 60a und eine zweite Sensorvorrichtung 30b zur Überwachung des zweiten Deformationsbereichs 40b und/oder eines zweiten Aktivierungsmittels 60b vorgesehen.

Im Falle der Figur 4 kann die Erfindung für jede Sensorvorrichtung 30, nämlich für die erste Sensorvorrichtung 30a und für die zweite Sensorvorrichtung 30b, jeweils ein Abschirmungselement 34, nämlich ein erstes Abschirmungselement 34a für die erste Sensorvorrichtung 30a und ein zweites Abschirmungselement 34b für die zweite Sensorvorrichtung 30b, vorsehen. Somit können die Funktionen der ersten Sensorvorrichtung 30a und der zweiten Sensorvorrichtung 30b vor Fehlbedienungen geschützt werden.

Gemäß der Figur 4 ist es denkbar, dass das erste Abschirmungselement 34a innenseitig am Türgriffkörper 20 und das zweite Abschirmungselement 34b außenseitig am Türgriffkörper 20 angeordnet sein können. Das erste Abschirmungselement 34a kann dabei vorteilhafterweise hinter der ersten Sensorvorrichtung 30a an der Innenseite 20.1 des Türgriffkörpers 20 angeordnet sein, die dem Fahrzeug 3 abgewandt ist. Somit kann das erste Abschirmungselement 34a den Störbereich hinter der ersten Sensorvorrichtung 30a abschirmen, der nach außen bzgl. des Fahrzeuges 3 gerichtet ist. Somit kann das erste Abschirmungselement 34a sicherstellen, dass nur eine bewusste, vorzugsweise manuelle, Aktivierungshandlung, bspw. durch Hintergreifen hinter den Türgriffkörper 20 in die Griffmulde 21 detektiert wird und keine ungewollte kontaktfreie Fehlbetätigung der Sensorvorrichtung von außerhalb des Fahrzeuges 3 möglich ist. Das zweite Abschirmungselement 34b kann vorteilhafterweise den Betrieb der zweiten Sensorvorrichtung 30b vor Fehlbetätigungen schützen. Dabei kann das zweite Abschirmungselement 34b vor dem zweiten Aktivierungsmittel 60b angeordnet sein, von diesem jedoch galvanisch getrennt sein, bspw. mindestens eine Lage der Wandung 22. Auch bei dem zweiten Abschirmungselement 34b kann es vorteilhaft sein, wenn das zweite Abschirmungselement 34b einen Störbereich nach außen, weg vom Fahrzeug abschirmen kann. Bei einem zweiten Abschirmungselement 34b ist es denkbar, dass es an einer Außenseite 20.2 des Türgriffkörpers 20 angebracht sein kann.

Gleichwohl ist es aber auch denkbar, dass beide, nämlich das erste Abschirmungselement 34a und das zweite Abschirmungselement 34b an der Innenseite 20.1 des Türgriffkörpers 20 angeordnet sein können.

Gemäß den Figuren 1 und 3 sowie 6 und 7 kann eine kapazitive Sensorik 70 mit zumindest einem Sensorikelement vorgesehen sein, um weitere Handlungen des Bedieners 5 zu detektieren. Hierdurch kann bspw. eine Annäherung durch den Bediener 5 erfasst werden, um weitere Funktionen des Fahrzeuges 3 oder eines Sicherheitssystems 6 des Fahrzeuges 3 zu aktivieren.

Gemäß den Figuren 1 und 3 sowie 6 und 7 kann des Weiteren eine NFC-Sensorik 90 mit mindestens einem NFC-Sensorikelement innerhalb des Türgriffkörpers 20 vorgesehen sein. Die NFC-Sensorik kann vorteilhafterweise dazu dienen, eine sichere Übertragung von, insbesondere sicherheitsrelevanten, Daten über relativ kurze Distanzen, vorzugsweise bis zu 10 cm, zu ermöglichen. Mithilfe der NFC-Technik kann dem Bediener ermöglicht werden, sein Mobilgerät, wie z. B. Smartphone oder ein Tablett, als einen ID-geber 4 und/oder zur Kommunikation mit dem Fahrzeug 3, bspw. mit dem Sicherheitssystem 6 des Fahrzeuges 3, einzusetzen. Ein NFC-Chip kann weiterhin auf einer Karte als ein Kommunikationsmittel und/oder als ein ID-Geber 4 gespeichert sein. Eine Karte kann vorteilhafterweise im Portmonee des Bedieners 5 mitgeführt werden, ohne viel Platz einzunehmen.

Im Rahmen der Erfindung kann eine einschichtige oder mehrschichtige Platine 31 für die mindestens eine Sensorvorrichtung 30, eine Steuerelektronik 36, eine kapazitive Sensorik 70 und/oder eine NFC-Sensorik 90 vorgesehen sein. Ferner ist es denkbar, dass die mindestens eine Sensorvorrichtung 30, eine Steuerelektronik 36, eine kapazitive Sensorik 70 und/oder eine NFC-Sensorik 90 in einer Schicht oder in unterschiedlichen Schichten einer Platine 31 angeordnet sein können.

In der Figur 5a ist schematisch ein erfindungsgemäßes Sicherheitssystem 6 eines Fahrzeuges 3 gezeigt, wobei bspw. durch eine kapazitive Sensorik 70 eine Annäherung eines Bedieners 5 detektiert wird. Daraufhin kann es vorgesehen sein, dass ein Wecksignal an einen ID-Geber 4 ausgesandt wird, um einen Authentifizierungsvorgang zu initiieren. Dabei kann es vorgesehen sein, dass ausschließlich erst nach erfolgreicher Authentifizierung ein Öffnen eines elektrischen Schlosses 2 durch die Aktivierungshandlung, welche durch eine Sensorvorrichtung 30 detektiert wird, erfolgen kann. Der ID-Geber 4 kann bspw. in Form eines Mobilgeräts, eines Smartphones oder einer einfachen Karte in Form einer Visitenkarte mit einem Chip ausgebildet sein.

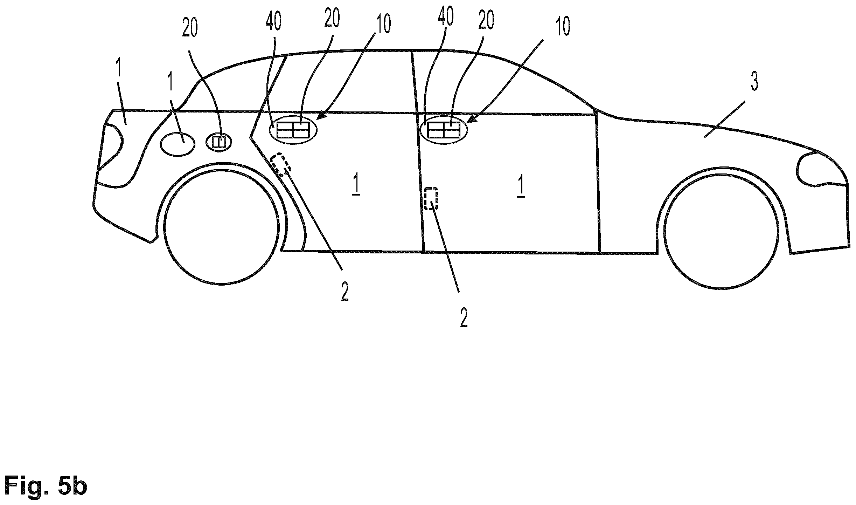

In der weiteren Figur 5b ist schematisch ein erfindungsgemäßes Sensorsystem 10 an einem Fahrzeug 3 gezeigt. Dabei kommen anstelle der sonst beim Fahrzeug vorhandenen Türgriffe mit den rausstehenden Türgriffkörpern die Betätigungselemente 20 zum Einsatz, die den jeweiligen Deformationsbereich 40 aufweisen, und mit dem induktiven Aktivierungsmittel 60 zusammenwirken. Dabei stellt das Türblech bzw. Fahrzeugblech im Wesentlichen das Betätigungselement 20 dar, auf den der Bediener drücken kann, um eine Deformation im Deformationsbereich 40 zu erzeugen, wobei diese Deformation durch das induktive Aktivierungsmittel 60, welches auf der Innenseite des Türbleches angeordnet ist, erfassbar ist. Durch das jeweilige Betätigungselement 20, welches dem beweglichen Teil 1 jeweils zugeordnet ist, kann dann das bewegliche Teil vorzugsweise automatisch geöffnet werden. Wie in der Figur 5b zu erkennen ist, dient das Sensorsystem 10 mit den jeweiligen Betätigungselementen 20 dazu, die Fronttüren 1, die Hecktüren 1 oder Heckklappe 1 oder die Tankklappe 1 beim Fahrzeug 3 zu betätigen. Das Betätigungselement 20 kann, wie gezeigt, in verschiedene Teilbereiche unterteilt sein, um verschiedene Funktionen, wie z. B. das Öffnen oder das Schließen des beweglichen Teils 1 mit Hilfe des elektrischen Schlosses 2 zu bewirken. Hierzu kann auch der jeweilige Deformationsbereich 40 z. B. in verschiedene Bereiche 40a, 40b unterteilt sein. In der Ansicht der Figur 5b kann das jeweilige Abschirmungselement 34 jeweils vor dem Aktivierungsmittel 60 im jeweiligen Deformationsbereich 40 angeordnet sein, von diesem jedoch galvanisch getrennt sein, bspw. durch mindestens eine Lage der Wandung 22 des Betätigungselementes 20.

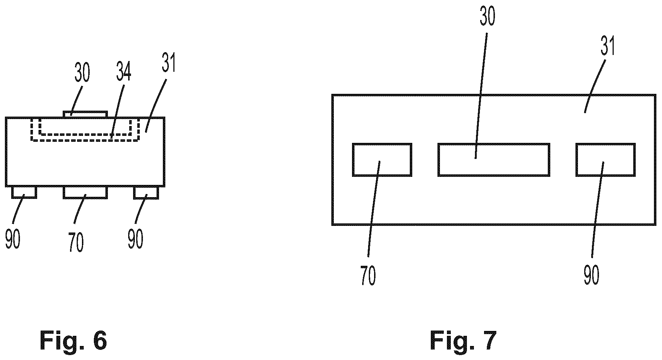

In der Figur 6 ist eine Seitenansicht einer möglichen Platine 31 im Rahmen der Erfindung gezeigt, wobei zu sehen ist, dass die Sensorvorrichtung 30 gemeinsam mit einer kapazitiven Sensorik 70 und einer NFC-Sensorik 90 an der Platine 31 angeordnet ist. Die Sensorvorrichtung 30 ist dabei auf der dem Deformationsbereich 40 zugewandten Seite der Platine 31 angeordnet. Die Sensorvorrichtung 30 kann bspw. auf einer anderen Seite der Platine 31 angeordnet sein als die kapazitive Sensorik 70 und die NFC-Sensorik 90.

In Figur 7 ist eine Draufsicht auf eine beispielhafte Platine 31 gezeigt. Es ist die Anordnung der Sensorvorrichtung 30 auf der Platine 31 zu erkennen, wobei benachbart zu der Sensorvorrichtung 30 eine kapazitive Sensorik 70 und eine NFC-Sensorik 90 auf der gleichen Seite der Platine 31 vorgesehen sein können.

Grundsätzlich ist es denkbar, dass die kapazitive Sensorik 70 und die NFC-Sensorik 90 räumlich getrennt zueinander angeordnet sein können, wie dies die Figur 7 andeutet. Zugleich ist es denkbar, dass die kapazitive Sensorik 70 und die NFC-Sensorik 90 einen gemeinsamen Raum nutzen können, wie dies die Figur 6 andeutet. Dabei ist es denkbar, dass die NFC-Sensorik 90 eine Spule aufweisen kann, die die kapazitive Sensorik 70 umschließen kann. Die kapazitive Sensorik 70 kann einen offenen Leiter als eine Antenne, ggf. mit einer Zweigstruktur, aufweisen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: bewegliches Teil
- 2: elektrisches Schloss
- 3: Fahrzeug
- 4: ID-Geber
- 5: Bediener
- 6: Sicherheitssystem

- 10: Sensorsystem, Türgriff
- 20: Betätigungselement, Türgriffkörper
- 20.1: Innenseite
- 20.2: Außenseite
- 20.3: Innenraum
- 21: Griffmulde
- 22: Wandung
- 22.1: Wandstärke

- 30: Sensorvorrichtung
- 30a: erste Sensorvorrichtung
- 30b: zweite Sensorvorrichtung
- 31: Platine
- 32: Halterungsvorrichtung
- 33: Sensorlagerpunkt
- 34: Abschirmungselement
- 34a: erstes Abschirmungselement
- 34b: zweites Abschirmungselement
- 35: Rastelement
- 36: Steuerelektronik
- 40: Deformationsbereich
- 40a: erster Deformationsbereich
- 40b: zweiter Deformationsbereich

- 50: Strukturanpassung
- 50a: erste Strukturanpassung
- 50b: zweite Strukturanpassung
- 50.1: Ausnehmungswandstärke

- 60: Aktivierungsmittel
- 60a: erstes Aktivierungsmittel
- 60b: zweites Aktivierungsmittel

- 70: kapazitive Sensorik

- 80: Befestigungsvorrichtung
- 80a: erster Grifflagerungspunkt
- 80b: zweiter Grifflagerungspunkt

- 90: NFC-Sensorik

- D: Abstand

- S1: Seite des Türgriffes, die vom Fahrzeug abgewandt ist
- S2: Seite des Türgriffes, die zum Fahrzeug zugewandt ist

## Patentansprüche

1. Sensorsystem (10) für ein bewegliches Teil (1) eines Fahrzeuges (3), aufweisend:
ein Betätigungselement (20) mit wenigstens einem Deformationsbereich (40), in welchem eine Aktivierungshandlung durch einen Bediener (5) erfassbar ist,
wenigstens ein induktives Aktivierungsmittel (60), das im Deformationsbereich (40) angeordnet ist,
und wenigstens eine am Betätigungselement (20) und/oder am beweglichen Teil (1) angeordnete Sensorvorrichtung (30) zur Induktivitätsmessung am Aktivierungsmittel (60), wobei wenigstens ein Abschirmungselement (34) für die wenigstens eine Sensorvorrichtung (30) vorgesehen ist, um Störungen bei der Induktivitätsmessung zu vermeiden,
wobei eine erste Sensorvorrichtung (30a) und eine zweite Sensorvorrichtung (30b) am Betätigungselement (20) oder am beweglichen Teil (1) vorgesehen sind,
wobei die erste Sensorvorrichtung (30a) zur Induktivitätsmessung am ersten Deformationsbereich (40a) und die zweite Sensorvorrichtung (30b) zur Induktivitätsmessung am ersten Deformationsbereich (40a) oder am zweiten Deformationsbereich (40b) ausgeführt ist.

2. Sensorsystem (10) nach Anspruch 1,
**dadurch gekennzeichnet,**
**dass** das Sensorsystem (10) in Form eines Türgriffes (10), insbesondere eines feststehenden Türgriffes (10) ausgebildet ist, welches vorzugsweise unbeweglich am Fahrzeug (3), insbesondere am beweglichen Teil (1) des Fahrzeuges (3), angebracht ist, und/oder dass die Sensorvorrichtung (30) einen induktiven Sensor, insbesondere einen LDC-Sensor, aufweist.

3. Sensorsystem (10) nach einem der vorhergehenden Ansprüche,
**dadurch gekennzeichnet,**
**dass** das Betätigungselement (20) im Deformationsbereich (40) elastisch verformbar ausgestaltet ist,
und/oder dass die Sensorvorrichtung (30) zur Detektion der Aktivierungshandlung derart beabstandet zum Aktivierungsmittel (60) angeordnet ist, dass die Verformung des Betätigungselementes (20) durch die Induktivitätsmessung erfasst wird,

4. Sensorsystem (10) nach einem der vorhergehenden Ansprüche,
**dadurch gekennzeichnet,**
**dass** das Abschirmungselement (34) als eine elektrisch leitende Folie, vorzugsweise Metallfolie, und/oder eine elektrisch leitende Beschichtung und/oder wenigstens ein elektrisch leitendes Element, insbesondere aus Metall, ausgeführt ist,
und/oder dass das Abschirmungselement (34) vollständig galvanisch getrennt von der Sensorvorrichtung (30) und dem Aktivierungselement (60) ausgestaltet ist,
und/oder dass das Abschirmungselement (34) in einem Abstand zu der Sensorvorrichtung (30) von wenigstens 800 µm angeordnet ist,
und/oder dass das Abschirmungselement (34) innenseitig am Betätigungselement (20), insbesondere auf einer dem Fahrzeug (3) abgewandten Seite (S1) des Betätigungselementes (20) angeordnet ist,
und/oder dass das Abschirmungselement (34) außenseitig am Betätigungselement (20), insbesondere auf einer dem Fahrzeug (3) abgewandten Seite (S1) des Betätigungselementes (20) angeordnet ist.

5. Sensorsystem (10) nach einem der vorhergehenden Ansprüche,
**dadurch gekennzeichnet,**
**dass** das Abschirmungselement (34) stoffschlüssig, insbesondere mithilfe eines Klebers, am Betätigungselement (20) befestigt ist,
und/oder dass das Abschirmungselement (34) mithilfe eines additiven Beschichtungsverfahrens, vorzugsweise einer chemischen Gasphasenabscheidung oder einer physikalischen Gasphasenabscheidung, insbesondere mithilfe einer Sputterdeposition, am Betätigungselement (20) aufgetragen ist,
und/oder dass das Abschirmungselement (34) form- und/oder kraftschlüssig, insbesondere mithilfe mindestens eines Rastelementes (35), am Betätigungselement (20) befestigt ist.

6. Sensorsystem (10) nach einem der vorhergehenden Ansprüche,
**dadurch gekennzeichnet,**
**dass** das Aktivierungsmittel (60) als eine elektrisch leitende Folie und/oder eine elektrisch leitende Beschichtung und/oder wenigstens ein elektrisch leitendes Element, insbesondere aus Metall, bevorzugt elastisch verformbar und/oder vollständig galvanisch getrennt, ausgestaltet ist, und besonders bevorzugt innenseitig am Betätigungselement (20) und/oder an einer Strukturanpassung (50) der Wandung (22) angeordnet ist,
und/oder dass wenigstens ein erster Deformationsbereich (40a) mit zumindest einem ersten Aktivierungsmittel (60a) auf der dem Fahrzeug (3) zugewandten Seite (S2) des Betätigungselementes (20), und wenigstens ein zweiter Deformationsbereich (40b) mit zumindest einem zweiten Aktivierungsmittel (60b) insbesondere auf der dem Fahrzeug (3) abgewandten Seite (S1) des Betätigungselementes (20) vorgesehen ist.

7. Sensorsystem (10) nach einem der vorhergehenden Ansprüche,
**dadurch gekennzeichnet,**
**dass** die erste Sensorvorrichtung (30a) und die zweite Sensorvorrichtung (30b) auf unterschiedlichen Seiten einer Platine (31) angeordnet sind.

8. Sensorsystem (10) nach einem der vorhergehenden Ansprüche,
**dadurch gekennzeichnet,**
**dass** ein erstes Abschirmungselement (34a) für eine erste Sensorvorrichtung (30a) und ein zweites Abschirmungselement (34b) für eine zweite Sensorvorrichtung (30b) vorgesehen sind,
und/oder dass das erste Abschirmungselement (34a) innenseitig am Betätigungselement (20) und das zweite Abschirmungselement (34b) außenseitig am Betätigungselement (20) angeordnet sind,
oder dass das erste Abschirmungselement (34a) und das zweite Abschirmungselement (34b) innenseitig am Betätigungselement (20) angeordnet sind.

9. Sensorsystem (10) nach einem der vorhergehenden Ansprüche,
**dadurch gekennzeichnet,**
**dass** eine Wandung (22) des Betätigungselementes (20) im Deformationsbereich (40) eine Strukturanpassung (50), insbesondere eine Ausnehmung und/oder eine Materialschwächung, aufweist, wobei vorzugsweise die Wandung (22) und/oder das Betätigungselement (20) im Bereich der Strukturanpassung (50) eine zur Erfassung mit der Sensorvorrichtung (30) ausreichende elastische Verformbarkeit aufweist,
und/oder dass die Strukturanpassung (50) außenseitig am Betätigungselement (20), insbesondere an einer Wandung (22) des Betätigungselementes (20) im Deformationsbereich (40), ausgebildet ist,
und/oder dass eine durchschnittliche Wandstärke (22.1) einer Wandung (22) des Betätigungselementes (20) außerhalb des Deformationsbereichs (40) wenigstens 50 % größer ist als im Deformationsbereich (40), wobei vorzugsweise die durchschnittliche Wandstärke (22.1) der Wandung (22) des Betätigungselementes (20) im Deformationsbereich (40), insbesondere der Strukturanpassung (50), im Bereich von 1 mm bis 2 mm, bevorzugt 1,3 mm bis 1,7 mm, liegt.

10. Sensorsystem (10) nach einem der vorhergehenden Ansprüche,
**dadurch gekennzeichnet,**
**dass** ein Abstand (D) zwischen der Sensorvorrichtung (30) und dem von der Sensorvorrichtung (30) überwachten Aktivierungsmittel (60) im Bereich von 1 mm bis 5 mm, insbesondere 2 mm bis 3 mm liegt,
und/oder dass ein Bereich zwischen der Sensorvorrichtung (30) und dem Aktivierungsmittel (60), und insbesondere ein Innenraum (20.3) des Betätigungselementes (20) bzw. des Türgriffkörpers (20), zumindest teilweise mit einem Füllelement, insbesondere Vergussmasse, ausgefüllt sind.

11. Sensorsystem (10) nach einem der vorhergehenden Ansprüche,
**dadurch gekennzeichnet,**
**dass** eine kapazitive Sensorik (70) mit mindestens einem kapazitiven Sensorikelement am Betätigungselement (20), bspw. innerhalb des Türgriffkörpers (20), vorgesehen ist,
und/oder eine NFC-Sensorik (90) mit mindestens einem NFC-Sensorikelement am Betätigungselement (20), bspw. innerhalb des Türgriffkörpers (20), vorgesehen ist,
und/oder dass eine einschichtige oder mehrschichtige Platine (31) für die mindestens eine Sensorvorrichtung (30), eine Steuerelektronik (36), und/oder eine kapazitive Sensorik (70) und/oder eine NFC-Sensorik (90) vorgesehen ist,
und/oder dass die mindestens eine Sensorvorrichtung (30), eine Steuerelektronik (36), eine kapazitive Sensorik (70) und/oder eine NFC-Sensorik (90) in einer Schicht oder in unterschiedlichen Schichten einer Platine (31) angeordnet sind.

12. Sensorsystem (10) nach einem der vorhergehenden Ansprüche,
**dadurch gekennzeichnet,**
**dass** mindestens eines der folgenden Elemente: die mindestens eine Sensorvorrichtung (30), eine Steuerelektronik (36), eine kapazitive Sensorik (70) und/oder eine NFC-Sensorik (90) auf einer Seite, insbesondere nebeneinander, oder auf unterschiedlichen Seiten einer Platine (31) befestigt ist,
und/oder dass eine erste Sensorvorrichtung (30a) und eine zweite Sensorvorrichtung (30b) auf unterschiedlichen Seiten einer Platine (31) befestigt sind.

13. Verfahren für eine Detektion einer Aktivierungshandlung an einem Sensorsystem (10) für ein bewegliches Teils (1) eines Fahrzeuges (3) nach einem der Vorrichtungsansprüche 1 bis 12,
wobei die Aktivierungshandlung durch einen Bediener (5) an einem Betätigungselement (20) des Sensorsystems (10) in einem Deformationsbereich (40) durchgeführt wird, in welchem ein induktives Aktivierungsmittel (60) angeordnet ist, und
eine Sensorvorrichtung (30) am Betätigungselement (20) oder am beweglichen Teil (1) eine Induktivitätsmessung durchführt, um die Aktivierungshandlung zu detektieren,
wobei ein Abschirmungselement (34) für die Sensorvorrichtung (30) benutzt wird, um Störungen bei der Induktivitätsmessung zu vermeiden.

14. Verfahren nach Anspruch 13,
**dadurch gekennzeichnet,**
**dass** die Sensorvorrichtung (30) bei der Detektion der Aktivierungshandlung ein Öffnungssignal, insbesondere an das elektrische Schloss (2) des Fahrzeuges (3), ausgibt, wobei die Detektion insbesondere bei einer Erfassung einer Verformung des Betätigungselementes (20) von etwa 0,05 mm bis 0,2 mm, bevorzugt 0,1 mm, erfolgt,
und/oder dass eine kapazitive Sensorik (70) vorgesehen ist, wobei vorzugsweise die kapazitive Sensorik (70) eine Annäherung des Bedieners (5) detektiert, insbesondere vor der Detektion der Aktivierungshandlung durch die Sensorvorrichtung (30),
und/oder dass eine NFC-Sensorik (90) vorgesehen ist, wobei vorzugsweise mithilfe der NFC-Sensorik (90) eine Kommunikation mit einem Mobilgerät (4) des Bedieners (5) durchgeführt wird, insbesondere vor der Detektion der Aktivierungshandlung durch die Sensorvorrichtung (30).

## Claims

1. Sensor system (10) for a moving part (1) of a vehicle (3), comprising:
an actuating element (20) with at least one deformation region (40), in which an activation action by an operator (5) can be detected,
at least one inductive activation means (60) arranged in the deformation region (40),
and at least one sensor device (30) arranged on the actuating element (20) and/or on the movable part (1) for measuring inductance on the activation means (60), at least one shielding element (34) being provided for the at least one sensor device (30) in order to avoid interference during the inductance measurement,
wherein a first sensor device (30a) and a second sensor device (30b) are provided on the actuating element (20) or on the movable part (1),
wherein the first sensor device (30a) is designed to measure inductance at the first deformation region (40a) and the second sensor device (30b) is designed to measure inductance at the first deformation region (40a) or at the second deformation region (40b).

2. Sensor system (10) according to claim 1,
**characterized in that**
the sensor system (10) is designed in the form of a door handle (10), in particular a fixed door handle (10), which is preferably attached immovably to the vehicle (3), in particular to the moving part (1) of the vehicle (3), and/or **in that** the sensor device (30) has an inductive sensor, in particular an LDC sensor.

3. Sensor system (10) according to one of the preceding claims,
**characterized in that**
the actuating element (20) is designed to be elastically deformable in the deformation region (40),
and/or **in that** the sensor device (30) for detecting the activation action is arranged at a distance from the activation means (60) in such a way that the deformation of the actuating element (20) is detected by the inductance measurement.

4. Sensor system (10) according to one of the preceding claims,
**characterized in that**
the shielding element (34) is designed as an electrically conductive foil, preferably metal foil, and/or an electrically conductive coating and/or at least one electrically conductive element, in particular made of metal,
and/or that the shielding element (34) is completely galvanically isolated from the sensor device (30) and the activation means (60),
and/or that the shielding element (34) is arranged at a distance of at least 800 µm from the sensor device (30),
and/or that the shielding element (34) is arranged on the inside of the actuating element (20), in particular on a side (S1) of the actuating element (20) facing away from the vehicle (3),
and/or that the shielding element (34) is arranged on the outside of the actuating element (20), in particular on a side (S1) of the actuating element (20) facing away from the vehicle (3).

5. Sensor system (10) according to one of the preceding claims,
**characterized in that**
the shielding element (34) is attached to the actuating element (20) by a material bond, in particular with the aid of an adhesive,
and/or that the shielding element (34) is applied to the actuating element (20) with the aid of an additive coating process, preferably a chemical vapor deposition or a physical vapor deposition, in particular with the aid of a sputter deposition,
and/or **in that** the shielding element (34) is positively and/or non-positively attached to the actuating element (20), in particular with the aid of at least one latching element (35).

6. Sensor system (10) according to one of the preceding claims,
**characterized in that**
the activation means (60) is designed as an electrically conductive foil and/or an electrically conductive coating and/or at least one electrically conductive element, in particular made of metal, preferably elastically deformable and/or completely galvanically isolated, and is particularly preferably arranged on the inside of the actuating element (20) and/or on a structural adaptation (50) of the wall (22),
and/or **in that** at least one first deformation region (40a) with at least one first activation means (60a) is provided on the side (S2) of the actuating element (20) facing the vehicle (3), and at least one second deformation region (40b) with at least one second activation means (60b) is provided in particular on the side (S1) of the actuating element (20) facing away from the vehicle (3).

7. Sensor system (10) according to one of the preceding claims,
**characterized in that**
the first sensor device (30a) and the second sensor device (30b) are arranged on different sides of a circuit board (31).

8. Sensor system (10) according to one of the preceding claims,
**characterized in that**
a first shielding element (34a) is provided for a first sensor device (30a) and a second shielding element (34b) is provided for a second sensor device (30b),
and/or **in that** the first shielding element (34a) is arranged on the inside of the actuating element (20) and the second shielding element (34b) is arranged on the outside of the actuating element (20),
or that the first shielding element (34a) and the second shielding element (34b) are arranged on the inside of the actuating element (20).

9. Sensor system (10) according to one of the preceding claims,
**characterized in that**
a wall (22) of the actuating element (20) in the deformation region (40) has a structural adaptation (50), in particular a recess and/or a material weakening, preferably the wall (22) and/or the actuating element (20) in the region of the structural adaptation (50) having an elastic deformability sufficient for detection with the sensor device (30),
and/or that the structural adaptation (50) is formed on the outside of the actuating element (20), in particular on a wall (22) of the actuating element (20) in the deformation region (40),
and/or **in that** an average wall thickness (22.1) of a wall (22) of the actuating element (20) outside the deformation region (40) is at least 50% greater than in the deformation region (40), preferably the average wall thickness (22.1) of the wall (22) of the actuating element (20) in the deformation region (40), in particular the structural adaptation (50), being in the range from 1 mm to 2 mm, preferably 1.3 mm to 1.7 mm.

10. Sensor system (10) according to one of the preceding claims,
**characterized in that**
a distance (D) between the sensor device (30) and the activation means (60) monitored by the sensor device (30) is in the range from 1 mm to 5 mm, in particular 2 mm to 3 mmt,
and/or **in that** an area between the sensor device (30) and the activation means (60), and in particular an interior (20.3) of the actuating element (20) or the door handle body (20), are at least partially filled with a filling element, in particular a casting compound.

11. Sensor system (10) according to one of the preceding claims,
**characterized in that**
a capacitive sensor system (70) with at least one capacitive sensor element is provided on the actuating element (20), for example inside the door handle body (20),
and/or an NFC sensor system (90) with at least one NFC sensor element is provided on the actuating element (20), for example inside the door handle body (20),
and/or that a single-layer or multi-layer circuit board (31) is provided for the at least one sensor device (30), control electronics (36), and/or capacitive sensor technology (70) and/or NFC sensor technology (90),
and/or that the at least one sensor device (30), an electronic control unit (36), a capacitive sensor system (70) and/or an NFC sensor system (90) are arranged in one layer or in different layers of a circuit board (31).

12. Sensor system (10) according to one of the preceding claims,
**characterized in that**
at least one of the following elements: the at least one sensor device (30), an electronic control unit (36), a capacitive sensor system (70) and/or an NFC sensor system (90) is fastened on one side, in particular next to one another, or on different sides of a circuit board (31),
and/or that a first sensor device (30a) and a second sensor device (30b) are mounted on different sides of a circuit board (31).

13. Method for detecting an activation action on a sensor system (10) for a movable part (1) of a vehicle (3) according to one of the device claims 1 to 12,
wherein the activation action is performed by an operator (5) on an actuating element (20) of the sensor system (10) in a deformation region (40) in which an inductive activation means (60) is arranged, and
a sensor device (30) carries out an inductance measurement on the actuating element (20) or on the moving part (1) in order to detect the activation action, a shielding element (34) being used for the sensor device (30) in order to avoid interference in the inductance measurement.

14. Method according to claim 13,
**characterized in that**
the sensor device (30) emits an opening signal, in particular to the electric lock (2) of the vehicle (3), when the activation action is detected, the detection taking place in particular when a deformation of the actuating element (20) of approximately 0.05 mm to 0.2 mm, preferably 0.1 mm, is detected,
and/or **in that** a capacitive sensor system (70) is provided, the capacitive sensor system (70) preferably detecting an approach of the operator (5), in particular before the sensor device (30) detects the activation action,
and/or **in that** an NFC sensor system (90) is provided, wherein communication with a mobile device (4) of the operator (5) is preferably carried out with the aid of the NFC sensor system (90), in particular before the sensor device (30) detects the activation action.

## Revendications

1. Système de détection (10) pour une partie mobile (1) d'un véhicule (3), comprenant :
un élément d'actionnement (20) avec au moins une zone de déformation (40), dans laquelle une action d'activation peut être détectée par un opérateur (5),
au moins un moyen d'activation inductif (60), qui est disposé dans la zone de déformation (40),
et au moins un dispositif de détection (30) disposé sur l'élément d'actionnement (20) et/ou sur la partie mobile (1) pour mesurer l'inductance sur le moyen d'activation (60), au moins un élément de blindage (34) étant prévu pour le au moins un dispositif de détection (30) afin d'éviter des perturbations lors de la mesure de l'inductance,
dans lequel un premier dispositif de détection (30a) et un deuxième dispositif de détection (30b) sont prévus sur l'élément d'actionnement (20) ou sur la partie mobile (1),
le premier dispositif de détection (30a) étant réalisé pour mesurer l'inductance sur la première zone de déformation (40a) et le deuxième dispositif de détection (30b) étant réalisé pour mesurer l'inductance sur la première zone de déformation (40a) ou sur la deuxième zone de déformation (40b).

2. Système de détection (10) selon la revendication 1,
**caractérisé en ce que**
le système de détection (10) est réalisé sous la forme d'une poignée de porte (10), en particulier d'une poignée de porte fixe (10), qui est montée de préférence de manière immobile sur le véhicule (3), en particulier sur la partie mobile (1) du véhicule (3), et/ou en ce que le dispositif de détection (30) présente un capteur inductif, en particulier un capteur LDC.

3. Système de détection (10) selon l'une des revendications précédentes,
**caractérisé en ce que**
l'élément d'actionnement (20) est conçu de manière à pouvoir être déformé élastiquement dans la zone de déformation (40),
et/ou **en ce que** le dispositif de détection (30) pour la détection de l'action d'activation est disposé à une distance telle du moyen d'activation (60) que la déformation de l'élément d'actionnement (20) est détectée par la mesure d'inductance.

4. Système de détection (10) selon l'une des revendications précédentes,
**caractérisé en ce que**
l'élément de blindage (34) est réalisé sous la forme d'une feuille électriquement conductrice, de préférence une feuille métallique, et/ou un revêtement électriquement conducteur et/ou au moins un élément électriquement conducteur, en particulier en métal,
et/ou **en ce que** l'élément de blindage (34) est conçu de manière à être complètement séparé galvaniquement du dispositif de détection (30) et du moyen d'activation (60),
et/ou **en ce que** l'élément de blindage (34) est disposé à une distance du dispositif de détection (30) d'au moins 800 µm,
et/ou **en ce que** l'élément de blindage (34) est disposé du côté intérieur sur l'élément d'actionnement (20), en particulier sur un côté (S1) de l'élément d'actionnement (20) opposé au véhicule (3),
et/ou **en ce que** l'élément de blindage (34) est disposé du côté extérieur sur l'élément d'actionnement (20), en particulier sur un côté (S1) de l'élément d'actionnement (20) opposé au véhicule (3).

5. Système de détection (10) selon l'une des revendications précédentes,
**caractérisé en ce que**
l'élément de blindage (34) est fixé à l'élément d'actionnement (20) par liaison de matière, en particulier à l'aide d'une colle,
et/ou **en ce que** l'élément de blindage (34) est appliqué sur l'élément d'actionnement (20) à l'aide d'un procédé de revêtement additif, de préférence un dépôt chimique en phase vapeur ou un dépôt physique en phase vapeur, en particulier à l'aide d'une déposition par pulvérisation,
et/ou **en ce que** l'élément de blindage (34) est fixé à l'élément d'actionnement (20) par complémentarité de forme et/ou de force, en particulier à l'aide d'au moins un élément d'encliquetage (35).

6. Système de détection (10) selon l'une des revendications précédentes,
**caractérisé en ce que**
le moyen d'activation (60) est réalisé sous la forme d'une feuille conductrice de l'électricité et/ou d'un revêtement conducteur de l'électricité et/ou d'au moins un élément conducteur de l'électricité, en particulier en métal, de préférence élastiquement déformable et/ou complètement séparé galvaniquement, et est disposé de manière particulièrement préférée du côté intérieur sur l'élément d'actionnement (20) et/ou sur une adaptation structurelle (50) de la paroi (22),
et/ou **en ce qu'**au moins une première zone de déformation (40a) avec au moins un premier moyen d'activation (60a) est prévue sur le côté (S2) de l'élément d'actionnement (20) tourné vers le véhicule (3), et au moins une deuxième zone de déformation (40b) avec au moins un deuxième moyen d'activation (60b) est prévue en particulier sur le côté (S1) de l'élément d'actionnement (20) détourné du véhicule (3).

7. Système de détection (10) selon l'une des revendications précédentes,
**caractérisé en ce que**
le premier dispositif de détection (30a) et le deuxième dispositif de détection (30b) sont disposés sur des côtés différents d'une platine (31).

8. Système de détection (10) selon l'une des revendications précédentes,
**caractérisé en ce qu'**
un premier élément de blindage (34a) est prévu pour un premier dispositif de détection (30a) et un deuxième élément de blindage (34b) est prévu pour un deuxième dispositif de détection (30b),
et/ou **en ce que** le premier élément de blindage (34a) est disposé sur le côté intérieur de l'élément d'actionnement (20) et le deuxième élément de blindage (34b) est disposé sur le côté extérieur de l'élément d'actionnement (20),
ou **en ce que** le premier élément de blindage (34a) et le deuxième élément de blindage (34b) sont disposés à l'intérieur de l'élément d'actionnement (20).

9. Système de détection (10) selon l'une des revendications précédentes,
**caractérisé en ce qu'**
une paroi (22) de l'élément d'actionnement (20) présente dans la zone de déformation (40) une adaptation structurelle (50), en particulier un évidement et/ou un affaiblissement de matériau, la paroi (22) et/ou l'élément d'actionnement (20) présentant de préférence dans la zone de l'adaptation structurelle (50) une déformabilité élastique suffisante pour la détection avec le dispositif de détection (30),
et/ou **en ce que** l'adaptation structurelle (50) est réalisée du côté extérieur sur l'élément d'actionnement (20), en particulier sur une paroi (22) de l'élément d'actionnement (20) dans la zone de déformation (40),
et/ou **en ce qu'**une épaisseur de paroi moyenne (22.1) d'une paroi (22) de l'élément d'actionnement (20) en dehors de la zone de déformation (40) est supérieure d'au moins 50 % à celle dans la zone de déformation (40), l'épaisseur de paroi moyenne (22.1) de la paroi (22) de l'élément d'actionnement (20) dans la zone de déformation (40), en particulier de l'adaptation structurelle (50), étant de préférence comprise dans la plage de 1 mm à 2 mm, de préférence de 1,3 mm à 1,7 mm.

10. Système de détection (10) selon l'une des revendications précédentes,
**caractérisé en ce que**
une distance (D) entre le dispositif de détection (30) et le moyen d'activation (60) surveillé par le dispositif de détection (30) se situe dans la plage de 1 mm à 5 mm, en particulier de 2 mm à 3 mmt,
et/ou **en ce que** une zone entre le dispositif de détection (30) et le moyen d'activation (60), et en particulier un espace intérieur (20.3) de l'élément d'actionnement (20) ou du corps de poignée de porte (20), sont au moins partiellement remplis d'un élément de remplissage, en particulier d'une masse de scellement.

11. Système de détection (10) selon l'une des revendications précédentes,
**caractérisé en ce qu'**
un système de détection capacitif (70) avec au moins un élément de détection capacitif est prévu sur l'élément d'actionnement (20), par exemple à l'intérieur du corps de poignée de porte (20),
et/ou un système de détection NFC (90) avec au moins un élément de détection NFC est prévu sur l'élément d'actionnement (20), par exemple à l'intérieur du corps de poignée de porte (20),
et/ou **en ce qu'**il est prévu une platine monocouche ou multicouche (31) pour le au moins un dispositif de détection (30), une électronique de commande (36), et/ou une technique de détection capacitive (70) et/ou une technique de détection NFC (90),
et/ou **en ce que** le au moins un dispositif de détection (30), une électronique de commande (36), une technique de détection capacitive (70) et/ou une technique de détection NFC (90) sont disposés dans une couche ou dans différentes couches d'une platine (31).

12. Système de détection (10) selon l'une des revendications précédentes,
**caractérisé en ce qu'**
au moins l'un des éléments suivants : le au moins un dispositif de détection (30), une électronique de commande (36), un dispositif de détection capacitif (70) et/ou un dispositif de détection NFC (90) est fixé sur un côté, en particulier côte à côte, ou sur des côtés différents d'une platine (31),
et/ou **en ce qu'**un premier dispositif de détection (30a) et un deuxième dispositif de détection (30b) sont fixés sur des côtés différents d'une platine (31).

13. Procédé de détection d'une action d'activation sur un système de détection (10) d'une partie mobile (1) d'un véhicule (3) selon l'une des revendications 1 à 12 du dispositif,
dans lequel l'action d'activation est effectuée par un opérateur (5) sur un élément d'actionnement (20) du système de détection (10) dans une zone de déformation (40) dans laquelle est disposé un moyen d'activation inductif (60) et
un dispositif de détection (30) effectue une mesure d'inductance sur l'élément d'actionnement (20) ou sur la partie mobile (1) afin de détecter l'action d'activation, un élément de blindage (34) étant utilisé pour le dispositif de détection (30) afin d'éviter les perturbations lors de la mesure d'inductance.

14. Procédé selon la revendication 13,
**caractérisé en ce que**
le dispositif de détection (30) émet, lors de la détection de l'action d'activation, un signal d'ouverture, en particulier à la serrure électrique (2) du véhicule (3), la détection s'effectuant en particulier lors d'une détection d'une déformation de l'élément d'actionnement (20) d'environ 0,05 mm à 0,2 mm, de préférence 0,1 mm,
et/ou **en ce qu'**il est prévu un système de détection capacitif (70), le système de détection capacitif (70) détectant de préférence une approche de l'opérateur (5), notamment avant la détection de l'action d'activation par le dispositif de détection (30),
et/ou **en ce qu'**il est prévu un système de détection NFC (90), une communication avec un appareil mobile (4) de l'opérateur (5) étant de préférence effectuée à l'aide du système de détection NFC (90), en particulier avant la détection de l'action d'activation par le dispositif de détection (30).
